(19) Europäisches Patentamt
European Patent Office
Office européen des brevets

(11) EP 4 134 244 A1

(12) **EUROPEAN PATENT APPLICATION**
published in accordance with Art. 153(4) EPC

(43) Date of publication:
**15.02.2023 Bulletin 2023/07**

(21) Application number: **21783806.9**

(22) Date of filing: **29.03.2021**

(51) International Patent Classification (IPC):
***B60C 1/00*** *(1968.09)* ***C08C 19/25*** *(1990.01)*
***C08F 36/04*** *(1974.07)* ***C08L 9/00*** *(1974.07)*
***C08L 9/06*** *(1974.07)* ***C08K 3/013*** *(2018.01)*

(52) Cooperative Patent Classification (CPC):
**B60C 1/00; C08C 19/25; C08F 36/04; C08K 3/013; C08L 9/00; C08L 9/06;** Y02T 10/86

(86) International application number:
**PCT/JP2021/013377**

(87) International publication number:
**WO 2021/205932 (14.10.2021 Gazette 2021/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.04.2020 JP 2020068943**

(71) Applicants:
- **ZS Elastomers Co., Ltd.**
  **Tokyo 100-8246 (JP)**
- **SUMITOMO CHEMICAL COMPANY, LIMITED**
  **Tokyo 103-6020 (JP)**
- **Zeon Corporation**
  **Tokyo 100-8246 (JP)**

(72) Inventors:
- **RODRIGUEZ CASTANON, Jesus**
  **Sodegaura-shi, Chiba 299-0295 (JP)**
- **HAMA, Hisakatsu**
  **Sodegaura-shi, Chiba 299-0295 (JP)**
- **KANESAKA, Sho**
  **Ichihara-shi, Chiba 299-0195 (JP)**
- **ICHIMIYA, Yukari**
  **Tokyo 103-6020 (JP)**

(74) Representative: **Maiwald GmbH**
**Elisenhof**
**Elisenstraße 3**
**80335 München (DE)**

# (54) CONJUGATED-DIENE-BASED POLYMER, COMPOSITION OF CONJUGATED-DIENE-BASED POLYMER, CROSSLINKED RUBBER OBJECT, AND TIRE

(57) Provided is a conjugated diene-based polymer comprising at least conjugated diene monomer units, and having a shrinkage factor of high molecular weight molecules of 0.4 to 0.8, a degree of adsorption of high molecular weight molecules onto silica of 75% or less, and a degree of adsorption of medium molecular weight molecules of 40 to 100%.

EP 4 134 244 A1

## Description

### TECHNICAL FIELD

The present invention relates to a conjugated diene-based polymer, a conjugated diene-based polymer composition, a cross-linked rubber, and a tire, and more specifically relates to a conjugated diene-based polymer which has high processability and can provide a cross-linked rubber having high fuel efficiency, and a conjugated diene-based polymer composition prepared from such a conjugated diene-based polymer, a cross-linked rubber, and a tire.

### BACKGROUND ART

Recent growing environmental and resource issues lead to strong demands for polymer compositions which are used in tires for automobiles to provide high fuel efficiency. For the polymer compositions for automobile tires, polymer compositions comprising a conjugated diene-based polymer such as polybutadiene or a butadiene-styrene copolymer and a filler such as carbon black or silica are known, for example.

For example, Patent Document 1 discloses a method of preparing a polymer solution containing a conjugated diene-based polymer by adding a polymerization initiator to a monomer containing a conjugated diene compound in a hydrocarbon solvent, wherein the polymerization initiator is further added one time or two or more times during the polymerization reaction.

### RELATED ART DOCUMENT

### PATENT DOCUMENT

Patent Document 1: Japanese Patent Application Laid-Open No.

### SUMMARY OF THE INVENTION

### PROBLEM TO BE SOLVED BY THE INVENTION

Although fuel efficiency can be improved by using the conjugated diene-based polymer prepared by the technique disclosed in Patent Document 1 and compounding a filler such as silica, processability is insufficient, leading to a demand for an improvement in processability.

The present invention has been made in consideration of the above problem. An object of the present invention is to provide a conjugated diene-based polymer which has high fuel efficiency and can provide a cross-linked rubber having high processability. Another object of the present invention is to provide a conjugated diene-based polymer composition prepared from such a conjugated diene-based polymer, a cross-linked rubber, and a tire, and provide a method of preparing such a conjugated diene-based polymer.

### MEANS FOR SOLVING PROBLEMS

The present inventors, who have conducted extensive research to achieve the above object, have found that the above objects can be achieved by controlling the shrinkage factor of high molecular weight molecules in a conjugated diene-based polymer, the degree of adsorption thereof onto silica, and the degree of adsorption of medium molecular weight molecules onto silica within specific ranges, and thus have completed the present invention.

Specifically, the present invention provides a conjugated diene-based polymer comprising at least conjugated diene monomer units, and having a shrinkage factor of high molecular weight molecules of 0.4 to 0.8, a degree of adsorption of high molecular weight molecules onto silica of 75% or less, and a degree of adsorption of medium molecular weight molecules onto silica of 40 to 100%.

In the conjugated diene-based polymer according to the present invention, the shrinkage factor of medium molecular weight molecules is preferably 0.8 to 1.2.

In the conjugated diene-based polymer according to the present invention, the degree of adsorption of high molecular weight molecules onto silica is preferably 10 to 70%.

The conjugated diene-based polymer according to the present invention preferably has two or more peak values of molecular weight.

The conjugated diene-based polymer according to the present invention is preferably a copolymer containing the conjugated diene monomer units and aromatic vinyl monomer units.

In the conjugated diene-based polymer according to the present invention, the molecular weight $M_{p_LOW}$ of

low molecular weight molecules is preferably in the range of 100,000 to 190,000.

The present invention provides a conjugated diene-based polymer composition comprising the conjugated diene-based polymer and a filler.

The present invention also provides a cross-linked rubber prepared by cross-linking the conjugated diene-based polymer composition, and a tire comprising the cross-linked rubber.

Furthermore, the present invention provides a method of preparing a conjugated diene-based polymer, comprising:

a first step of polymerizing a monomer containing a conjugated diene compound in an inert solvent in the presence of a polymerization initiator to prepare a solution containing polymer chains having an active terminal;
a second step of partially converting the polymer chains having an active terminal prepared in the first step into coupled polymer chains by a coupling reaction to prepare a solution containing the polymer chains having an active terminal and the coupled polymer chains; and
a third step of further polymerizing the polymer chains having an active terminal with a monomer containing the conjugated diene compound after the coupling reaction is performed in the second step,
wherein in at least one of the first step and the third step, the monomer used in the polymerization is a monomer containing a vinyl compound having a functional group interactive with silica in addition to the conjugated diene compound.

In the method of preparing the conjugated diene-based polymer according to the present invention, preferably, the polymerization initiator is further added at any one of timings of during the polymerization in the first step, at the start of the polymerization in the third step, and during the polymerization in the third step.

EFFECTS OF INVENTION

The present invention can provide a conjugated diene-based polymer which has high processability and can provide a cross-linked rubber having high fuel efficiency. The present invention can also provide a conjugated diene-based polymer composition prepared from such a conjugated diene-based polymer, a cross-linked rubber, and a tire, as well as a method of preparing such a conjugated diene-based polymer.

BRIEF DESCRIPTION OF DRAWINGS

FIGs. 1(A) and 1(B) are graphs showing one exemplary GPC chart when the conjugated diene-based polymer according to the present invention has a unimodal distribution.
FIGs. 2(A) and 2(B) are graphs showing one exemplary GPC chart when the conjugated diene-based polymer according to the present invention has a bimodal distribution.
FIGs. 3(A) and 3(B) are graphs showing one exemplary GPC chart when the conjugated diene-based polymer according to the present invention has a bimodal distribution.
FIGs. 4(A) and 4(B) are graphs showing one exemplary GPC chart when the conjugated diene-based polymer according to the present invention has a trimodal distribution.
FIGs. 5(A) and 5(B) are graphs showing one exemplary GPC chart when the conjugated diene-based polymer according to the present invention has a tetramodal distribution.
FIG. 6 is one example of a graph showing the relation among the molecular weight, the intrinsic viscosity $[\eta]$ measured by 3D-GPC, the intrinsic viscosity $[\eta]_0$ of a straight-chained polymer, and the shrinkage factor g'.
FIG. 7 is a graph schematically showing the results of GPC measurements using a styrene-based column and a silica-based column.

DESCRIPTION OF EMBODIMENTS

<Conjugated diene-based polymer>

The conjugated diene-based polymer according to the present invention is a conjugated diene-based polymer containing at least conjugated diene monomer units, and having a shrinkage factor of high molecular weight molecules of 0.4 to 0.8, a degree of adsorption of high molecular weight molecules onto silica of 75% or less, and a degree of adsorption of medium molecular weight molecules onto silica of 40 to 100%.

The conjugated diene-based polymer according to the present invention contains conjugated diene monomer

units. Examples of conjugated diene compounds for forming conjugated diene monomer units include 1,3-butadiene, isoprene, 2,3-dimethyl-1,3-butadiene, 2-chloro-1,3-butadiene, 1,3-pentadiene, 1,3-hexadiene, and the like. Among these, preferred are 1,3-butadiene and isoprene, and more preferred is 1,3-butadiene.

The conjugated diene-based polymer according to the present invention is preferably a copolymer containing conjugated diene monomer units and aromatic vinyl monomer units. Examples of aromatic vinyl compounds for forming aromatic vinyl monomer units include styrene, methylstyrene, ethylstyrene, t-butylstyrene, α-methylstyrene, α-methyl-p-methylstyrene, chlorostyrene, bromostyrene, methoxystyrene, dimethylaminomethylstyrene, dimethylaminoethylstyrene, diethylaminomethylstyrene, diethylaminoethylstyrene, cyanoethylstyrene, vinylnaphthalene, and the like. Among these, preferred is styrene. The content of aromatic vinyl monomer units in the conjugated diene-based polymer according to the present invention is preferably 3 to 50% by weight, more preferably 4 to 50% by weight relative to 100% by weight of the total monomer content. Control of the content of the aromatic vinyl monomer units within these ranges results in a cross-linked rubber having further enhanced fuel efficiency.

In addition to the conjugated diene monomer units and the aromatic vinyl monomer units, the conjugated diene-based polymer according to the present invention preferably contains units of a vinyl compound having a functional group interactive with silica.

The vinyl compound having a functional group interactive with silica for forming units of a vinyl compound having a functional group interactive with silica can be any compound having a functional group interactive with silica and a vinyl group, and is not particularly limited. Here, the functional group interactive with silica is a functional group which forms a covalent bond between the functional group and the silica surface or can cause an intermolecular force weaker than the covalent bond (such as ion-dipole interaction, dipole-dipole interaction, hydrogen bond, or van der Waals force). Examples of such a functional group interactive with silica include, but should not be limited to, nitrogen atom-containing functional groups, silicon atom-containing functional groups, oxygen atom-containing functional groups, and the like. Among these, preferred are silicon atom-containing functional groups because they are highly interactive with silica.

In a preferred embodiment of the vinyl compound having a functional group interactive with silica, the vinyl compound having a silicon atom-containing functional group which can be suitably used is, for example, a compound represented by General Formula (1):

[Chem. 1]

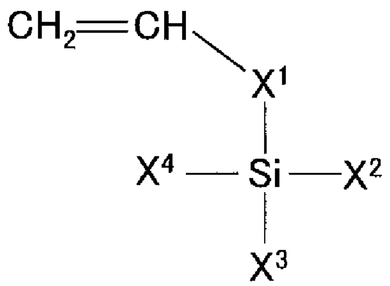

(1)

where $X^1$ represents a chemical single bond or a hydrocarbylene group, and $X^2$, $X^3$, and $X^4$ each independently represent a substituted amino group, a hydrocarbyloxy group, or an optionally substituted hydrocarbyl group.

In General Formula (1), $X^1$ is a chemical single bond or a hydrocarbylene group, preferably a chemical single bond. Examples of the hydrocarbylene group include alkylene, alkenediyl, arylene groups, groups of arylene groups bonded to alkylene groups, and the like.

Examples of alkylene groups include a methylene group, an ethylene group, a trimethylene group, and the like. Examples of alkenediyl groups include a vinylene group, an ethylene-1,1-diyl group, and the like. Examples of arylene groups include a phenylene group, a naphthylene group, a biphenylene group, and the like. Examples of arylene groups bonded to alkylene groups include a group of a phenylene group bonded to a methylene group, a group of a phenylene group bonded to an ethylene group, and the like. When $X^1$ is a hydrocarbylene group, $X^1$ is preferably an arylene group, more preferably a phenylene group.

In General Formula (1), $X^2$, $X^3$, and $X^4$ each independently represent a substituted amino group, a hydrocarbyloxy group, or an optionally substituted hydrocarbyl group. It is preferred that at least one of $X^2$, $X^3$, and $X^4$ be a substituted amino group, and it is more preferred that two of $X^2$, $X^3$, and $X^4$ be a substituted amino group.

A suitable substituted amino group which can form $X^2$, $X^3$, and $X^4$ is a group represented by General Formula (2):

[Chem. 2]

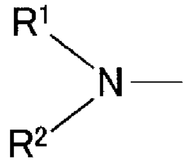

(2)

where $R^1$ and $R^2$ may or may not be bonded to each other; if $R^1$ and $R^2$ are not bonded to each other, $R^1$ and $R^2$ each independently represent an optionally substituted hydrocarbyl group or a trihydrocarbylsilyl group; and if $R^1$ and $R^2$ are bonded to each other, $R^1$ and $R^2$ represent a hydrocarbylene group optionally containing at least one species selected from the group consisting of nitrogen, oxygen, sulfur, and silicon atoms.

Examples of a hydrocarbyl group which can form $R^1$ and $R^2$ include linear alkyl groups such as a methyl group, an ethyl group, an n-propyl group, an isopropyl group, an n-butyl group, an isobutyl group, a sec-butyl group, a tert-butyl group, an n-pentyl group, an n-hexyl group, and an n-octyl group; cyclic alkyl groups such as a cyclopentyl group and a cyclohexyl group; aryl groups such as a phenyl group, a benzyl group, and a naphthyl group; and the like. Among these, preferred are linear alkyl groups, and more preferred is a methyl group or an ethyl group.

If the hydrocarbyl group which can form $R^1$ and $R^2$ has a substituent, examples thereof include hydrocarbyl groups having a hydrocarbyloxy group as a substituent, and the like. Examples of a hydrocarbyl group having a hydrocarbyloxy group as a substituent include alkoxyalkyl groups such as a methoxymethyl group, an ethoxymethyl group, and a methoxyethyl group; aryloxyalkyl groups such as a phenoxymethyl group; and the like.

Specific examples of a trihydrocarbylsilyl group which can form $R^1$ and $R^2$ include trialkylsilyl groups such as a trimethylsilyl group, a triethylsilyl group, and a tert-butyldimethylsilyl group, and the like.

If $R^1$ and $R^2$ are bonded to each other, examples of the hydrocarbylene group which can form $R^1$ and $R^2$ include alkylene groups such as a trimethylene group, a tetramethylene group, a pentamethylene group, a hexamethylene group, a heptamethylene group, an octamethylene group, a decamethylene group, a dodecamethylene group, and a 2,2,4-trimethylhexane-1,6-diyl group; alkenediyl groups such as a pentan-2-ene-1,5-diyl group; and the like. If the hydrocarbylene group which can form $R^1$ and $R^2$ contains at least one species selected from the group consisting of nitrogen, oxygen, sulfur, and silicon atoms, examples of the hydrocarbylene group containing at least one species selected from the group consisting of nitrogen, oxygen, sulfur, and silicon atoms include a group represented by -CH=N-CH=CH-, a group represented by $-CH=N-CH_2-CH_2-$, a group represented by $-CH_2-CH_2-O-CH_2-CH_2-$, a group represented by $-CH_2-CH_2-S-CH_2-CH_2-$, a group represented by $-CH_2-CH_2-SiH_2-CH_2-CH_2-$, a group represented by $-CH_2-CH_2-SiMe_2-CH_2-CH_2-$, a group represented by $-CH_2-CH_2-SiEt_2-CH_2-CH_2-$, and the like.

Preferably, $R^1$ and $R^2$ are an alkyl group or are bonded to form an alkylene group. More preferably, $R^1$ and $R^2$ are an alkyl group. Still more preferably, $R^1$ and $R^2$ are a methyl group or an ethyl group.

When $R^1$ and $R^2$ in General Formula (2) are hydrocarbyl groups, specific examples of groups represented by General Formula (2) include dialkylamino groups such as a dimethylamino group, a diethylamino group, an ethylmethylamino group, a di-n-propylamino group, a diisopropylamino group, a di-n-butylamino group, a diisobutylamino group, a di-sec-butylamino group, and a di-tert-butylamino group; diarylamino groups such as a diphenylamino group; and the like. Among these, preferred are dialkylamino groups, and more preferred are a dimethylamino group, a diethylamino group, and a di-n-butylamino group.

In General Formula (2), if $R^1$ and $R^2$ each are a hydrocarbyl group having a hydrocarbyloxy group as a substituent, specific examples of the group represented by General Formula (2) include di(alkoxyalkyl)amino groups such as a di(methoxymethyl)amino group and a di(ethoxymethyl)amino group, and the like.

If $R^1$ and $R^2$ in General Formula (2) are trihydrocarbylsilyl groups, specific examples of the group represented by General Formula (2) include trialkylsilyl group-containing amino groups such as a bis(trimethylsilyl)amino group, a bis(tert-butyldimethylsilyl)amino group, and an N-trimethylsilyl-N-methylamino group, and the like.

If $R^1$ and $R^2$ in General Formula (2) are bonded to each other to form a hydrocarbylene group, specific examples of the group represented by General Formula (2) include 1-alkyleneimino groups such as a 1-trimethyleneimino group, a 1-pyrrolidino group, a 1-piperidino group, a 1-hexamethyleneimino group, a 1-heptamethyleneimino group, a 1-octamethyleneimino group, a 1-decamethyleneimino group, and a 1-dodecamethyleneimino group, and the like.

If $R^1$ and $R^2$ in General Formula (2) are bonded to form a hydrocarbylene group containing a nitrogen atom and/or an oxygen atom, specific examples of the group represented by General Formula (2) include a 1-imidazolyl group, a 4,5-dihydro-1-imidazolyl group, a morpholino group, and the like.

The group represented by General Formula (2) is preferably a dialkylamino group or a 1-alkyleneimino group. More preferred are dialkylamino groups, and still more preferred are a dimethylamino group, a diethylamino group, and a di-n-butylamino group.

Examples of the hydrocarbyloxy group which can form $X^2$, $X^3$, and $X^4$ in General Formula (1) include alkoxy

groups such as a methoxy group, an ethoxy group, an n-propoxy group, an isopropoxy group, an n-butoxy group, a sec-butoxy group, and a tert-butoxy group; aryloxy groups such as a phenoxy group and a benzyloxy group; and the like.

Examples of the hydrocarbyl group which can form $X^2$, $X^3$, and $X^4$ in General Formula (1) include alkyl groups such as a methyl group, an ethyl group, an n-propyl group, an isopropyl group, an n-butyl group, a sec-butyl group, and a tert-butyl group; aryl groups such as a phenyl group, a 4-methyl-1-phenyl group, and a benzyl group; and the like.

If the hydrocarbyl group which can form $X^2$, $X^3$, and $X^4$ has a substituent, examples thereof include hydrocarbyl groups having a hydrocarbyloxy group as a substituent. Examples thereof include alkoxyalkyl groups such as a methoxymethyl group, an ethoxymethyl group, an ethoxyethyl group, and the like.

If in General Formula (1), $X^1$ is a chemical single bond and one of $X^2$, $X^3$, and $X^4$ is a substituted amino group, specific examples of the vinyl compound having a silicon atom-containing functional group represented by General Formula (1) include (dialkylamino)dialkylvinylsilanes such as (dimethylamino)dimethylvinylsilane, (ethylmethylamino)dimethylvinylsilane, (di-n-propylamino)dimethylvinylsilane, (diisopropylamino)dimethylvinylsilane, (dimethylamino)diethylvinylsilane, (ethylmethylamino)diethylvinylsilane, (di-n-propylamino)diethylvinylsilane, and (diisopropylamino)diethylvinylsilane; [bis(trialkylsilyl)amino]dialkylvinylsilanes such as [bis(trimethylsilyl)amino]dimethylvinylsilane, [bis(t-butyldimethylsilyl)amino]dimethylvinylsilane, [bis(trimethylsilyl)amino]diethylvinylsilane, and [bis(t-butyldimethylsilyl)amino]diethylvinylsilane; (dialkylamino)di(alkoxyalkyl)vinylsilanes such as (dimethylamino)di(methoxymethyl)vinylsilane, (dimethylamino)di(methoxyethyl)vinylsilane, (dimethylamino)di(ethoxymethyl)vinylsilane, (dimethylamino)di(ethoxyethyl)vinylsilane, (diethylamino)di(methoxymethyl)vinylsilane, (diethylamino)di(methoxyethyl)vinylsilane, (diethylamino)di(ethoxymethyl)vinylsilane, and (diethylamino)di(ethoxyethyl)vinylsilane; cyclic aminodialkylvinylsilane compounds such as pyrrolidinodimethylvinylsilane, piperidinodimethylvinylsilane, hexamethyleneiminodimethylvinylsilane, 4,5-dihydroimidazolyldimethylvinylsilane, and morpholinodimethylvinylsilane; and the like.

If in General Formula (1), $X^1$ is a hydrocarbylene group and one of $X^2$, $X^3$, and $X^4$ is a substituted amino group, specific examples of the vinyl compound having a silicon atom-containing functional group represented by General Formula (1) include (dialkylamino)dialkylvinylphenylsilanes such as (dimethylamino)dimethyl-4-vinylphenylsilane, (dimethylamino)dimethyl-3-vinylphenylsilane, (diethylamino)dimethyl-4-vinylphenylsilane, (diethylamino)dimethyl-3-vinylphenylsilane, (di-n-propylamino)dimethyl-4-vinylphenylsilane, (di-n-propylamino)dimethyl-3-vinylphenylsilane, (di-n-butylamino)dimethyl-4-vinylphenylsilane, (di-n-butylamino)dimethyl-3-vinylphenylsilane, (dimethylamino)diethyl-4-vinylphenylsilane, (dimethylamino)diethyl-3-vinylphenylsilane, (diethylamino)diethyl-4-vinylphenylsilane, (diethylamino)diethyl-3-vinylphenylsilane, (di-n-propylamino)diethyl-4-vinylphenylsilane, (di-n-propylamino)diethyl-3-vinylphenylsilane, (di-n-butylamino)diethyl-4-vinylphenylsilane, and (di-n-butylamino)diethyl-3-vinylphenylsilane; and the like.

If in General Formula (1), $X^1$ is a chemical single bond and two of $X^2$, $X^3$, and $X^4$ are substituted amino groups, specific examples of the vinyl compound containing a silicon atom-containing functional group represented by General Formula (1) include bis(dialkylamino)alkylvinylsilanes such as bis(dimethylamino)methylvinylsilane, bis(diethylamino)methylvinylsilane, bis(di-n-propylamino)methylvinylsilane, bis(di-n-butylamino)methylvinylsilane, bis(dimethylamino)ethylvinylsilane, bis(diethylamino)ethylvinylsilane, bis(di-n-propylamino)ethylvinylsilane, and bis(di-n-butylamino)ethylvinylsilane; bis[bis(trialkylsilyl)amino]alkylvinylsilanes such as bis[bis(trimethylsilyl)amino]methylvinylsilane, bis[bis(tert-butyldimethylsilyl)amino]methylvinylsilane, bis[bis(trimethylsilyl)amzno]ethylvinylsilane, and bis[bis(tert-butyldimethylsilyl) amino]ethylvinylsilane; bis(dialkylamino)alkoxyalkylsilanes such as bis(dimethylamino)methoxymethylvinylsilane, bis(dimethylamino)methoxyethylvinylsilane, bis(dimethylamino)ethoxymethylvinylsilane, bis(dimethylamino)ethoxyethylvinylsilane, bis(diethylamino)methoxymethylvinylsilane, bis(diethylamino)methoxyethylvinylsilane, bis(diethylamino)ethoxymethylvinylsilane, and bis(dimethylamino)ethoxyethylvinylsilane; bis(cyclic amino)alkylvinylsilane compounds such as bis(pyrrolidino)methylvinylsilane, bis(piperidino)methylvinylsilane, bis(hexamethyleneimino)methylvinylsilane, bis(4,5-dihydroimidazolyl)methylvinylsilane, and bis(morpholino)methylvinylsilane; and the like.

If in General Formula (1), $X^1$ is a hydrocarbylene group and two of $X^2$, $X^3$, and $X^4$ are substituted amino groups, specific examples of the vinyl compound having a silicon atom-containing functional group represented by General Formula (1) include bis(dialkylamino)alkylvinylphenylsilanes such as bis(dimethylamino)methyl-4-vinylphenylsilane, bis(dimethylamino)methyl-3-vinylphenylsilane, bis(diethylamino)methyl-4-vinylphenylsilane, bis(diethylamino)methyl-3-vinylphenylsilane, bis(di-n-propylamino)methyl-4-vinylphenylsilane, bis(di-n-propylamino)methyl-3-vinylphenylsilane, bis(di-n-butylamino)methyl-4-vinylphenylsilane, bis(di-n-butylamino)methyl-3-vinylphenylsilane, bis(dimethylamino)ethyl-4-vinylphenylsilane, bis(dimethylamino)ethyl-3-vinylphenylsilane, bis(diethylamino)ethyl-4-vinylphenylsilane, bis(diethylamino)ethyl-3-vinylphenylsilane, bis(di-n-propylamino)ethyl-4-vinylphenylsilane, bis(di-n-propylamino)ethyl-3-vinylphenylsilane, bis(di-n-butylamino)ethyl-4-vinylphenylsilane, and bis(di-n-butylamino)ethyl-3-vinylphenylsilane.

If in General Formula (1), $X^1$ is a chemical single bond and three of $X^2$, $X^3$, and $X^4$ are substituted amino groups, specific examples of the vinyl compound having a silicon atom-containing functional group represented by General Formula (1) include tris(dialkylamino)vinylsilanes such as tris(dimethylamino)vinylsilane, tris(diethylamino)vinylsilane, tris(di-n-propylamino)vinylsilane, and tris(di-n-butylamino)vinylsilane, and the like.

If in General Formula (1), $X^1$ is a hydrocarbylene group and three of $X^2$, $X^3$, and $X^4$ are substituted amino groups, specific examples of the vinyl compound having silicon atom-containing functional group represented by General

Formula (1) include tris(dialkylamino)vinylphenylsilanes such as tris(dimethylamino)-4-vinylphenylsilane, tris(dimethylamino)-3-vinylphenylsilane, tris(diethylamino)-4-vinylphenylsilane, tris(diethylamino)-3-vinylphenylsilane, tris(di-n-propylamino)-4-vinylphenylsilane, tris(di-n-propylamino)-3-vinylphenylsilane, tris(di-n-butylamino)-4-vinylphenylsilane, and tris(di-n-butylamino)-3-vinylphenylsilane.

If in General Formula (1), $X^1$ is a chemical single bond and all of $X^2$, $X^3$, and $X^4$ are not substituted amino groups, specific examples of the vinyl compound having a silicon atom-containing functional group represented by General Formula (1) include trialkoxyvinylsilanes such as trimethoxyvinylsilane, triethoxyvinylsilane, and tripropoxyvinylsilane; dialkoxyalkylvinylsilanes such as methyldimethoxyvinylsilane and methyldiethoxyvinylsilane; dialkoxyarylvinylsilanes such as di(tert-pentoxy)phenylvinylsilane and di(tert-butoxy)phenylvinylsilane; monoalkoxydialkylvinylsilanes such as dimethylmethoxyvinylsilane; monoalkoxydiarylvinylsilanes such as tert-butoxydiphenylvinylsilane and tert-pentoxydiphenylvinylsilane; monoalkoxyalkylarylvinylsilanes such as tert-butoxymethylphenylvinylsilane and tert-butoxyethylphenylvinylsilane; substituted alkoxyvinylsilane compounds such as tris(β-methoxyethoxy)vinylsilane; and the like.

Among these compounds represented by General Formula (1), preferred are those where $X^1$ is a chemical single bond, more preferred are those where $X^1$ is a chemical single bond and two of $X^2$, $X^3$, and $X^4$ are substituted amino groups, and particularly preferred are those where $X^1$ is a chemical single bond and two of $X^2$, $X^3$, and $X^4$ are dialkylamino groups.

Among these compounds represented by General Formula (1), preferred are bis(dimethylamino)methylvinylsilane, bis(diethylamino)methylvinylsilane, and bis(di-n-butylamino)methylvinylsilane, and particularly preferred is bis(diethylamino)methylvinylsilane.

Examples of vinyl compounds having a functional group interactive with silica other than the compound represented by General Formula (1) include bis(trialkylsilyl)aminostyrenes such as 4-N,N-bis(trimethylsilyl)aminostyrene and 3-N,N-bis(trimethylsilyl)aminostyrene; bis(trialkylsilyl)aminoalkylstyrenes such as 4-bis(trimethylsilyl)aminomethylstyrene, 3-bis(trimethylsilyl)aminomethylstyrene, 4-bis(trimethylsilyl)aminoethylstyrene, and 3-bis(trimethylsilyl)aminoethylstyrene; and the like.

When the compound represented by General Formula (1) is used as the vinyl compound having a functional group interactive with silica, the conjugated diene-based polymer according to the present invention includes units represented by General Formula (3) as the units of the vinyl compound having a functional group interactive with silica:

[Chem. 3]

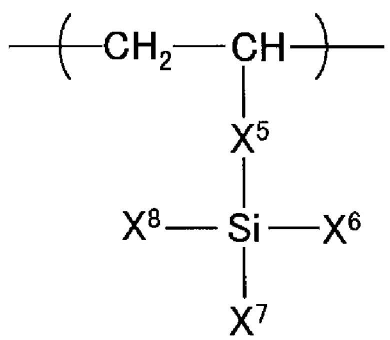

(3)

where $X^5$ represents a chemical single bond or a hydrocarbylene group, and $X^6$, $X^7$, and $X^8$ each independently represent a hydroxyl group, a substituted amino group, a hydrocarbyloxy group, or an optionally substituted hydrocarbyl group.

In the unit represented by General Formula (3), $X^5$ corresponds to $X^1$ in the compound represented by General Formula (1), and $X^6$, $X^7$, and $X^8$ correspond to $X^2$, $X^3$, and $X^4$ in the compound represented by General Formula (1). For this reason, $X^5$, $X^6$, $X^7$, and $X^8$ in the unit represented by General Formula (3) can be the same as those listed for $X^1$, $X^2$, $X^3$, and $X^4$ in the compound represented by General Formula (1). When the compound represented by General Formula (1) where at least one of $X^2$, $X^3$, and $X^4$ is a substituted amino group or a hydrocarbyloxy group is used, at least one of $X^2$, $X^3$, and $X^4$ can be converted into a hydroxyl group as a result of hydrolysis of the substituted amino group or the hydrocarbyloxy group at any timing in any step.

In the conjugated diene-based polymer according to the present invention, the content of units of the vinyl compound having a functional group interactive with silica is preferably 0.001 to 10.000% by weight, more preferably 0.001 to 3.000% by weight in 100% by weight of the total monomer amount. By controlling the content of units of the vinyl compound having a functional group interactive with silica within these ranges, the resulting cross-linked rubber can have further enhanced fuel efficiency while sufficient processability is ensured.

The conjugated diene-based polymer according to the present invention may contain different monomer units other than the conjugated diene monomer units, the aromatic vinyl monomer units, and the units of the vinyl compound

having a functional group interactive with silica. Examples of a different compound forming such different monomer units include linear olefin compounds such as ethylene, propylene, and 1-butene; cyclic olefin compounds such as cyclopentene and 2-norbornene; nonconjugated diene compounds such as 1,5-hexadiene, 1,6-heptadiene, 1,7-octadiene, dicyclopentadiene, and 5-ethylidene-2-norbornene; and the like.

In the conjugated diene-based polymer according to the present invention, the shrinkage factor of high molecular weight molecules is 0.4 to 0.8, the degree of adsorption of high molecular weight molecules onto silica is 75% or less, and the degree of adsorption of medium molecular weight molecules onto silica is 40 to 100%.

Here, low molecular weight molecules, medium molecular weight molecules, and high molecular weight molecules constituting the conjugated diene-based polymer according to the present invention will be described. Hereinafter, low molecular weight molecules will be represented by $P_{_LOW}$, medium molecular weight molecules $P_{_MID}$, and high molecular weight molecules $P_{_HIGH}$, and will be described with reference to FIGs. 1 to 5. FIGs. 1 to 5 are graphs each schematically showing one exemplary GPC chart obtained from gel permeation chromatography of the conjugated diene-based polymer according to the present invention using a styrene-based column.

First, an embodiment shown in FIG. 1(A) will be described, where the conjugated diene-based polymer according to the present invention has one maximum value in a molecular weight distribution obtained from measurement by gel permeation chromatography, i.e., a unimodal molecular weight distribution.

In the unimodal distribution shown in FIG. 1(B), first, the molecular weight corresponding to the maximum value in the molecular weight distribution is defined as the molecular weight $Mp_{_MID}$ of medium molecular weight molecules $P_{_MID}$. Of the molecular weights corresponding to a half intensity (i.e., 1/2 $S_{MID}$) of the peak intensity $S_{MID}$ at the molecular weight corresponding to the maximum value in the molecular weight distribution, the molecular weight on the lower molecular weight side is defined as the molecular weight $Mp_{_LOW}$ of low molecular weight molecules $P_{_LOW}$. Of the molecular weights corresponding to a half intensity (i.e., 1/2 $S_{MID}$) of the peak intensity $S_{MID}$ at the molecular weight corresponding to the maximum value in the molecular weight distribution, the molecular weight on the higher molecular weight side is defined as the molecular weight $Mp_{_HIGH}$ of high molecular weight molecules $P_{_HIGH}$.

FIG. 2(A) shows an embodiment in which the molecular weight distribution obtained by gel permeation chromatography has two maximum values, i.e., a bimodal molecular weight distribution. Here, the embodiment shown in FIG. 2(A) has a bimodal distribution with the two peaks containing the maximum value, where the peak area on the lower molecular weight side is larger than that on the higher molecular weight side.

As shown in FIG. 2(B), the embodiment FIG where the distribution is bimodal and the peak area on the lower molecular weight side is larger, the molecular weight corresponding to the maximum value of the peak having a large peak area on the lower molecular weight side in the molecular weight distribution is defined as the molecular weight $Mp_{_MID}$ of medium molecular weight molecules $P_{_MID}$. The molecular weight corresponding to the maximum value of the peak having a small peak area on the higher molecular weight side in the molecular weight distribution is defined as the molecular weight $Mp_{_HIGH}$ of high molecular weight molecules $P_{_HIGH}$. For the peak having a larger peak area on the lower molecular weight side, of the molecular weights corresponding to a half intensity (i.e., 1/2 $S_{MID}$) of the peak intensity $S_{MID}$ at the molecular weight corresponding to the maximum value in the molecular weight distribution, the molecular weight on the lower molecular weight side is defined as the molecular weight $Mp_{_LOW}$ of low molecular weight molecules $P_{_LOW}$.

In contrast, FIG. 3(A) shows an embodiment in which the molecular weight distribution obtained by gel permeation chromatography has two maximum values, i.e., a bimodal molecular weight distribution. In this embodiment, of the two peaks containing the maximum values, the peak area on the higher molecular weight side is larger than that on the lower molecular weight side.

In the embodiment shown in FIG. 3(B) where the distribution is bimodal and the peak area on the higher molecular weight side is larger, for the peak on the higher molecular weight side having a larger peak area, the molecular weight corresponding to the maximum value in the molecular weight distribution is defined as the molecular weight $Mp_{_MID}$ of medium molecular weight molecules $P_{_MID}$. For the peak on the lower molecular weight side having a small peak area, the molecular weight corresponding to the maximum value in the molecular weight distribution is defined as the molecular weight $Mp_{_LOW}$ of low molecular weight molecules $P_{_LOW}$. For the peak having a large peak area on the high molecular weight side, of the molecular weights corresponding to a half intensity (i.e., 1/2 $S_{MID}$) of the peak intensity $S_{MID}$ at the molecular weight corresponding to the maximum value in the molecular weight distribution, the molecular weight on the higher molecular weight side is defined as the molecular weight $Mp_{_HIGH}$ of high molecular weight molecules $P_{_HIGH}$.

FIG. 4(A) shows an embodiment in which the molecular weight distribution obtained by gel permeation chromatography has three maximum values, i.e., a trimodal molecular weight distribution.

In the embodiment having a trimodal distribution shown in FIG. 4(B), the three molecular weights corresponding to the maximum values in the molecular weight distribution are defined sequentially from the lower molecular weight side as molecular weight $Mp_{_LOW}$ of low molecular weight molecules $P_{_LOW}$, molecular weight $Mp_{_MID}$ of medium molecular weight molecules $P_{_MID}$, and molecular weight $Mp_{HIGH}$ of high molecular weight molecules $P_{_HIGH}$.

FIG. 5(A) shows an embodiment in which the molecular weight distribution obtained by gel permeation chromatography has four maximum values, i.e., a tetramodal molecular weight distribution.

In the embodiment shown in FIG. 5(B) where the distribution is tetramodal, among the four peaks corresponding to the four maximum values, a combination of three consecutive peaks is selected to have the largest total peak area. In the embodiment shown in FIG. 5(B), the three consecutive peaks including the peak furthest to the highest molecular weight side are selected. For the selected three consecutive peaks, the molecular weights corresponding to the maximum values in the molecular weight distribution are defined sequentially from the lower molecular weight side as the molecular weight $Mp_{_LOW}$ of low molecular weight molecules $P_{_LOW}$, the molecular weight $Mp_{_MID}$ of medium molecular weight molecules $P_{_MID}$, and the molecular weight $Mp_{_HIGH}$ of high molecular weight molecules $P_{_HIGH}$. Although the embodiment having a tetramodal distribution with four maximum values has been described with reference to FIGs. 5(A) and 5(B), in an embodiment having a penta- or higher distribution or five or more maximum values, similarly, three consecutive peaks are selected to have the largest total peak area, and the molecular weight $Mp_{_LOW}$ of low molecular weight molecules $P_{_LOW}$, the molecular weight $Mp_{_MID}$ of medium molecular weight molecules $P_{_MID}$, and the molecular weight $Mp_{_HIGH}$ of high molecular weight molecules $P_{_HIGH}$ are determined.

The molecular weight $Mp_{_LOW}$ of low molecular weight molecules $P_{_LOW}$ is in the range of preferably 50,000 to 200,000, more preferably 60,000 to 190,000, still more preferably 60,000 to 180,000, particularly preferably 70,000 to 160,000. By controlling the molecular weight $Mp_{_LOW}$ of low molecular weight molecules $P_{_LOW}$ within these ranges above, the resulting cross-linked rubber can have higher fuel efficiency while further improved processability is ensured.

The molecular weight $Mp_{_MID}$ of medium molecular weight molecules $P_{_MID}$ is in the range of preferably 210,000 to 600,000, more preferably 300,000 to 500,000, still more preferably 330,000 to 450,000. By controlling the molecular weight $Mp_{_MID}$ of medium molecular weight molecules $P_{_MID}$ within these ranges above, the resulting cross-linked rubber can have higher fuel efficiency while further improved processability is ensured.

The molecular weight $Mp_{HIGH}$ of high molecular weight molecules $P_{_HIGH}$ is in the range of preferably 610,000 to 1,400,000, more preferably 700,000 to 1,300,000, still more preferably 740,000 to 1,200,000. By controlling the molecular weight $Mp_{_HIGH}$ of high molecular weight molecules $P_{_HIGH}$ within these ranges above, the resistance to wear and the mechanical strength can be enhanced while favorable processability is ensured.

The weight average molecular weight $Mw_{_TOTAL}$ of the entire conjugated diene-based polymer according to the present invention is in the range of preferably 300,000 to 900,000, more preferably 350,000 to 800,000, still more preferably 400,000 to 700,000, particularly preferably 420,000 to 600,000. By controlling the weight average molecular weight $Mw_{_TOTAL}$ of the entire conjugated diene-based polymer within these ranges above, the resulting cross-linked rubber can have higher fuel efficiency while further improved processability is ensured.

The molecular weight distribution of the entire conjugated diene-based polymer according to the present invention represented by the ratio (Mw/Mn) of the weight average molecular weight (Mw) to the number average molecular weight (Mn) is preferably 1.1 to 3.0, more preferably 1.2 to 2.5, particularly preferably 1.2 to 2.2.

The above-mentioned molecular weights all can be determined by measurement by gel permeation chromatography using a styrene-based column as values against polystyrene standards. The molecular weight $Mp_{_LOW}$ of low molecular weight molecules $P_{_LOW}$, the molecular weight $Mp_{_MID}$ of medium molecular weight molecules $P_{_MID}$, and the molecular weight $Mp_{HIGH}$ of high molecular weight molecules $P_{_HIGH}$ can be specifically determined by the method described with reference to FIGs. 1 to 5.

Examples of a method of preparing the conjugated diene-based polymer according to the present invention having a molecular weight distribution having a bi- or higher modal distribution include, but should not be limited to, a method of further adding a polymerization initiator during polymerization in synthesis of the conjugated diene-based polymer by polymerizing monomers; a method of coupling polymer chains prepared by polymerization; and the like. At this time, for example, by appropriately selecting the timing for addition and/or the amount of the polymerization initiator to be further added, the timing to perform the coupling reaction, the type of the coupling agent to be used, and the like, the molecular weight $Mp_{_LOW}$ of low molecular weight molecules $P_{_LOW}$, the molecular weight $Mp_{_MID}$ of medium molecular weight molecules $P_{_MID}$, and the molecular weight $Mp_{_HIGH}$ of high molecular weight molecules $P_{_HIGH}$ can be controlled.

To further enhance the processability and the fuel efficiency, the molecular weight distribution of the conjugated diene-based polymer according to the present invention is preferably a bi- or higher modal distribution (having two or more peaks), more preferably a trimodal distribution (having three peaks). In the present invention, a value of intensity three or greater times the most adjacent minimum value is defined as a maximum value, and the number of peaks having such a maximum value is counted as the peak number. In other words, if the intensity has a maximum value less than three times the most adjacent minimum value, the maximum value is not considered as a maximum value for forming a peak.

In the conjugated diene-based polymer according to the present invention, the shrinkage factor of high molecular weight molecules $P_{HIGH}$ is 0.4 to 0.8, the degree of adsorption of high molecular weight molecules $P_{_HIGH}$ onto silica is 75% or less, and further, the degree of adsorption of medium molecular weight molecules $P_{_MID}$ onto silica is 40 to 100%.

Here, the shrinkage factor of high molecular weight molecules $P_{_HIGH}$ is an index indicating a degree of branching of high molecular weight molecules $P_{_HIGH}$. Using tetrahydrofuran as a solvent, the conjugated diene-based polymer is measured by a GPC apparatus (3D-GPC) including a viscosity detector, a light scattering detector, and a differential reflective index (RI) detector to measure the intrinsic viscosity [η], and the ratio of the measured intrinsic viscosity to a reference intrinsic viscosity $[\eta]_0$ can be calculated. Specifically, the conjugated diene-based polymer is measured by a 3D-GPC. From the result of measurement, the intrinsic viscosity [η] for the molecular weight $Mp_{_HIGH}$ of high molecular weight molecules $P_{_HIGH}$ is determined. From the determined intrinsic viscosity [η] and the reference intrinsic viscosity $[\eta]_0$, the shrinkage factor can be determined from shrinkage factor $g' = [\eta]/[\eta]_0$. The reference intrinsic viscosity $[\eta]_0$ is a calculated value of the intrinsic viscosity of a conjugated diene-based polymer without a branched structure (intrinsic viscosity of a straight-chained polymer), and it is likely that a lower value of the shrinkage factor g' indicates a higher degree of branching.

FIG. 6 shows one example of a graph showing the relation among the molecular weight, the intrinsic viscosity [η] measured by a 3D-GPC, the reference intrinsic viscosity $[\eta]_0$, and the shrinkage factor g'. FIG. 6 also shows a chart of the molecular weight distribution obtained from GPC measurement. As shown in FIG. 6, the shrinkage factor of high molecular weight molecules $P_{_HIGH}$ is determined by calculating the ratio $(\eta/\eta_0)$ of the intrinsic viscosity [η] measured at the molecular weight $Mp_{_HIGH}$ of high molecular weight molecules by 3D-GPC to the reference intrinsic viscosity $[\eta]_0$ at the molecular weight $Mp_{_HIGH}$ of high molecular weight molecules $P_{_HIGH}$.

In the conjugated diene-based polymer according to the present invention, the shrinkage factor of high molecular weight molecules $P_{_HIGH}$ is in the range of 0.4 to 0.8, preferably 0.4 to 0.7, more preferably 0.4 to 0.6. A significantly low shrinkage factor of high molecular weight molecules $P_{_HIGH}$ reduces the mechanical strength while a significantly high shrinkage factor of high molecular weight molecules $P_{_HIGH}$ reduces the processability. Examples of a method of controlling the shrinkage factor of high molecular weight molecules $P_{_HIGH}$ within these ranges above include, but should not be limited to, a method of subjecting polymer chains prepared by polymerization to a coupling reaction in the presence of a tri- or higher functional coupling agent.

In the conjugated diene-based polymer according to the present invention, similarly to the shrinkage factor of high molecular weight molecules $P_{_HIGH}$, the shrinkage factor of medium molecular weight molecules $P_{_MID}$ can also be determined by calculating the ratio $(\eta/\eta_0)$ of the intrinsic viscosity [η] measured at the molecular weight $Mp_{_MID}$ of medium molecular weight molecules $P_{_MID}$ by 3D-GPC and the reference intrinsic viscosity $[\eta]_0$ at the molecular weight $Mp_{_MID}$ of medium molecular weight molecules $P_{_MID}$. The shrinkage factor of medium molecular weight molecules $P_{_MID}$, although not particularly limited, is preferably 0.8 to 1.2, more preferably 0.8 to 1.0, still more preferably 0.8 to 0.9. By controlling the shrinkage factor of medium molecular weight molecules $P_{_MID}$ within these ranges above, the processability can be further enhanced.

The conjugated diene-based polymer according to the present invention has a degree of absorption of high molecular weight molecules $P_{_HIGH}$ onto silica and a degree of absorption of medium molecular weight molecules $P_{_MID}$ onto silica in specific ranges. Specifically, in the conjugated diene-based polymer according to the present invention, the degree of adsorption of high molecular weight molecules $P_{_HIGH}$ onto silica is in the range of 75% or less, and the degree of adsorption of medium molecular weight molecules $P_{_MID}$ onto silica is in the range of 40 to 100%. In the present invention, the degree of adsorption of high molecular weight molecules $P_{_HIGH}$ onto silica and that of medium molecular weight molecules $P_{_MID}$ onto silica can be determined by measurement of the conjugated diene-based polymer by GPC using a styrene-based column and a silica-based column, and calculation based on these results from the following expression (1):

Degree of adsorption (%) onto silica = (1 - (area $A_{Si}$ of sample obtained from GPC measurement using silica-based column/area $B_{Si}$ of standard polystyrene obtained from GPC measurement using silica-based column) × (area $B_{sty}$ of standard polystyrene obtained by GPC measurement using styrene-based column/area $A_{sty}$ of sample obtained by GPC measurement using styrene-based column)) × 100 (1)

Here, FIG. 7 is a graph schematically showing the results of GPC measurements using a styrene-based column and a silica-based column. As shown in FIG. 7, while polymer chains do not adsorb in the GPC measurement using a styrene-based column, polymer chains partially adsorb onto silica in the GPC measurement using a silica-based column.

This causes a differential in the results. In the present invention, the degree of adsorption of high molecular weight molecules $P_{_HIGH}$ onto silica and that of medium molecular weight molecules $P_{_MID}$ onto silica, which are obtained by such measurement, are specified.

The GPC measurement using a styrene-based column can be performed using a standard polystyrene having a molecular weight of 5000, two Plus Pore Series Poly Pore columns (7.5 mm I.D. × 300 mm, available from Agilent Technologies, Inc.), a column oven (CTO-20A, available from SHIMADZU Corporation) at a temperature of 35°C and an RI detector (RID-10A, available from SHIMADZU Corporation), and a mixed solution of tetrahydrofuran and 2-(ethylamino)ethanol as a mobile phase at a flow rate of 1.0 mL/min. The columns to be used may be three PLgel Mini MIXED-C columns (4.6 mm I.D. × 250 mm, available from Agilent Technologies, Inc.) connected or three PLgel MIXED-C columns (7.5 mm I.D.×300 mm, available from Agilent Technologies, Inc.) connected. The GPC measurement using a silica-based column can be performed using a standard polystyrene having a molecular weight of 5000, three columns in total, i.e., one Zorbax PSM1000-S (6.2 × 250 mm, available from Agilent Technologies, Inc.), one Zorbax PSM-300 (6.2 × 250 mm, available from Agilent Technologies, Inc.), and one Zorbax PSM60-S (6.2 × 250 mm, available from Agilent Technologies, Inc.), a column oven (CTO-20A, available from SHIMADZU Corporation) at a temperature of 35°C and an RI detector (RID-10A, available from SHIMADZU Corporation), and tetrahydrofuran as a mobile phase at a flow rate of 0.7 mL/min.

The degree of adsorption of high molecular weight molecules $P_{_HIGH}$ onto silica and that of medium molecular weight molecules $P_{_MID}$ onto silica are specifically determined as follows.

As shown in FIG. 1(A), when the conjugated diene-based polymer according to the present invention has a unimodal distribution, the degree of adsorption of medium molecular weight molecules $P_{_MID}$ onto silica is determined by determining the area between $Mp_{_LOW}$ and $Mp_{_HIGH}$ shown in FIG. 1(B) as a target area of the measurement. Specifically, after the areas $A_{Si}$ and $A_{sty}$ are determined where the areas $A_{Si}$ and $A_{sty}$ are the areas $A_{Si}$ and $A_{sty}$ corresponding to between $Mp_{_LOW}$ and $Mp_{_HIGH}$ shown in FIG. 1(B) (namely, the area $A_{Si}$ between $Mp_{_LOW}$ and $Mp_{_HIGH}$ obtained by the GPC measurement using a silica-based column and the area $A_{sty}$ between $Mp_{_LOW}$ and $Mp_{_HIGH}$ obtained by the GPC measurement using a styrene-based column), the degree of adsorption of medium molecular weight molecules $P_{_MID}$ onto silica can be calculated from the expression (1) using the determined areas $A_{Si}$ and $A_{sty}$. The degree of adsorption of high molecular weight molecules $P_{_HIGH}$ onto silica is determined by determining the area between $Mp_{_HIGH}$ shown in FIG. 1(B) and $Mp_{_1\%_HIGH}$ as a target area of the measurement (where $Mp_{_1\%_HIGH}$ is a molecular weight corresponding to an intensity which is 1/100 of the maximum intensity ($S_{MID}$ in FIG. 1(B)) and positioned on the higher molecular weight side). Specifically, after the areas $A_{Si}$ and $A_{sty}$ between $Mp_{_HIGH}$ shown in FIG. 1(B) and $Mp_{_1\%_HIGH}$ are determined, the degree of adsorption of high molecular weight molecules $P_{_HIGH}$ onto silica can be calculated from the expression (1) using the determined areas $A_{Si}$ and $A_{sty}$.

In the embodiment shown in FIG. 2(A) where the distribution is bimodal and the peak area on the lower molecular weight side is larger, after the areas $A_{Si}$ and $A_{sty}$ corresponding to between $Mp_{_LOW}$ and $Mp_{_TROUGH}$ shown in FIG. 2(B) are determined (where $Mp_{_TROUGH}$ is a molecular weight corresponding to the minimum value between $Mp_{_MID}$ and $Mp_{_HIGH}$), the degree of adsorption of medium molecular weight molecules $P_{_MID}$ onto silica can be calculated from the expression (1) using the determined areas $A_{Si}$ and $A_{sty}$. After the areas $A_{Si}$ and $A_{sty}$ corresponding to between $Mp_{_TROUGH}$ and $Mp_{_1\%_HIGH}$ shown in FIG. 2(B) are determined (where $Mp_{_1\%_HIGH}$ is a molecular weight corresponding to an intensity which is 1/100 of the maximum intensity ($S_{MID}$ in FIG. 2(B)) and positioned on the higher molecular weight side), the degree of adsorption of high molecular weight molecules $P_{_HIGH}$ onto silica can be calculated from the expression (1) using the determined areas $A_{Si}$ and $A_{sty}$.

In the embodiment shown in FIG. 3(A) where the distribution is bimodal and the peak area on the higher molecular weight side is larger, after the areas $A_{Si}$ and $A_{sty}$ corresponding to between $Mp_{_TROUGH}$ and $Mp_{_HIGH}$ shown in FIG. 3(B) are determined (where $Mp_{_TROUGH}$ is a molecular weight corresponding to the minimum value between $Mp_{_LOW}$ and $Mp_{_MID}$), the degree of adsorption of medium molecular weight molecules $P_{_MID}$ onto silica can be calculated from the expression (1) using the determined areas $A_{Si}$ and $A_{sty}$. After the areas $A_{Si}$ and $A_{sty}$ corresponding to between $Mp_{_HIGH}$ shown in FIG. 3 (B) and $Mp_{_1\%_HIGH}$ are determined (where $Mp_{_1\%_HIGH}$ is a molecular weight corresponding to an intensity which is 1/100 of the maximum intensity ($S_{MID}$ in FIG. 3(B)) and positioned on the higher molecular weight side), the degree of adsorption of high molecular weight molecules $P_{_HIGH}$ onto silica can be calculated from the expression (1) using the determined areas $A_{Si}$ and $A_{sty}$.

As shown in FIG. 4(A), in the case of a trimodal distribution, after the areas $A_{Si}$ and $A_{sty}$ corresponding to between $Mp_{_TROUGH}$ and $Mp_{_TROUGH_2}$ shown in FIG. 4(B) are determined (where $Mp_{_TROUGH_1}$ is a molecular weight corresponding to the minimum value between $Mp_{_LOW}$ and $Mp_{_MID}$, and $Mp_{_TROUGH_2}$ is a molecular weight corresponding to the minimum value between $Mp_{_MID}$ and $Mp_{_HIGH}$), the degree of adsorption of medium molecular weight molecules $P_{_MID}$ onto silica can be calculated from the expression (1) using the determined areas $A_{Si}$ and $A_{sty}$. After the areas $A_{Si}$ and $A_{sty}$ corresponding to between $Mp_{_TROUGH_2}$ shown in FIG. 4(B) and $Mp_{_1\%_HIGH}$ are determined (where $Mp_{_1\%_HIGH}$ is a molecular weight corresponding to an intensity which is 1/100 of the maximum intensity ($S_{MID}$ in FIG. 4(B)) and positioned on the higher molecular weight side), the degree of adsorption of high molecular weight molecules $P_{_HIGH}$

onto silica can be calculated from the expression (1) using the determined areas $A_{Si}$ and $A_{sty}$.

As shown in FIG. 5(A), in the case of a tetramodal distribution, after the areas $A_{Si}$ and $A_{sty}$ corresponding to between Mp $_{TROUGH_2}$ and Mp $_{TROUGH_3}$ shown in FIG. 5(B) are determined (where Mp $_{TROUGH_2}$ is a molecular weight corresponding to the minimum value between $Mp_{_LOW}$ and $Mp_{_MID}$, and $Mp_{_TROUGH_3}$ is a molecular weight corresponding to the value between $Mp_{_MID}$ and $Mp_{_HIGH}$), the degree of adsorption of medium molecular weight molecules $P_{_MID}$ onto silica can be calculated from the expression (1) using the determined areas $A_{Si}$ and $A_{sty}$. After the areas $A_{Si}$ and $A_{sty}$ between $Mp_{_TROUGH_3}$ shown in FIG. 5 (B) and $Mp_{_1\%_HIGH}$ are determined (where $Mp_{_1\%_HIGH}$ is a molecular weight corresponding to an intensity which is 1/100 of the maximum intensity ($S_{MID}$ in FIG. 5(B)) and positioned on the higher molecular weight side), the degree of adsorption of high molecular weight molecules $P_{_HIGH}$ onto silica can be calculated from the expression (1) using the determined areas $A_{Si}$ and $A_{sty}$. Similarly, in the embodiment having a penta- or higher distribution having five or more maximum values, the degree of adsorption of medium molecular weight molecules $P_{_MID}$ onto silica and that of high molecular weight molecules $P_{_HIGH}$ onto silica can be determined in the same manner as in the case where a tetramodal distribution is shown. Here, in all the embodiments, the molecular weight ranges used in calculation of the areas are measured using a styrene-based column, and the areas in the GPC charts measured using a silica-based column are also calculated using the ranges of the molecular weights determined using a styrene-based column. The area can be calculated by monitoring the elution times corresponding to the molecular weights, and integrating over the elution times.

The degree of adsorption of high molecular weight molecules $P_{_HIGH}$ onto silica is 75% or less, preferably 10 to 70%, more preferably 10 to 60%. A significantly high degree of adsorption of high molecular weight molecules $P_{_HIGH}$ onto silica reduces the processability. Examples of a method of controlling the degree of adsorption of high molecular weight molecules $P_{_HIGH}$ onto silica within these ranges include, but should not be limited to, a method of adjusting the amount and the type of units of the vinyl compound having a functional group interactive with silica contained in high molecular weight molecules $P_{_HIGH}$, and the like.

The degree of adsorption of medium molecular weight molecules $P_{_MID}$ onto silica is 40 to 100%, preferably 50 to 100%, more preferably 50 to 80%. A significantly low degree of adsorption of medium molecular weight molecules $P_{_MID}$ onto silica inhibits the fuel efficiency improving effect. Examples of a method of controlling the degree of adsorption of medium molecular weight molecules $P_{_MID}$ onto silica within these ranges include, but should not be limited to, a method of adjusting the amount and the type of units of the vinyl compound having a functional group interactive with silica contained in medium molecular weight molecules $P_{_MID}$.

In the conjugated diene-based polymer according to the present invention, the contents of low molecular weight molecules $P_{_LOW}$, medium molecular weight molecules $P_{_MID}$, and high molecular weight molecules $P_{_HIGH}$ are not particularly limited. The content of low molecular weight molecules $P_{_LOW}$ is preferably 5 to 20% by weight, more preferably 8 to 170 by weight. The content of medium molecular weight molecules $P_{_MID}$ is preferably 30 to 70% by weight, more preferably 50 to 60% by weight. The content of high molecular weight molecules $P_{_HIGH}$ is preferably 20 to 60% by weight, more preferably 25 to 40% by weight. The contents of low molecular weight molecules $P_{_LOW}$, medium molecular weight molecules $P_{_MID}$, and high molecular weight molecules P $_{HIGH}$ may be determined as follows.

Specifically, when the conjugated diene-based polymer according to the present invention has a unimodal distribution as shown in FIG. 1(A), the content of low molecular weight molecules $P_{_LOW}$ is determined based on the area between $Mp_{_1\%_LOW}$ (where $Mp_{_1\%_LOW}$ is a molecular weight corresponding to an intensity which is 1/100 of the maximum intensity ($S_{MID}$ in FIG. 1(B)) and positioned on the lower molecular weight side) and $Mp_{_LOW}$ shown in FIG. 1(B) defined as the area of low molecular weight molecules $P_{_LOW}$. The content of medium molecular weight molecules $P_{_MID}$ is determined based on the area between $Mp_{_LOW}$ and $Mp_{_HIGH}$ shown in FIG. 1(B) defined as the area of medium molecular weight molecules $P_{_MID}$. Furthermore, the content of high molecular weight molecules $P_{_HIGH}$ is determined based on the area between $Mp_{_HIGH}$ shown in FIG. 1(B) and $Mp_{_1\%_HIGH}$ defined as the area of high molecular weight molecules $P_{_HIGH}$.

In the embodiment shown in FIG. 2(A) where the distribution is bimodal and the peak area on the lower molecular weight side is larger, the content of low molecular weight molecules $P_{_LOW}$ is determined based on the area between $Mp_{_1\%_LOW}$ (where $Mp_{_1\%_LOW}$ is a molecular weight corresponding to an intensity which is 1/100 of the maximum intensity ($S_{MID}$ in FIG. 2(B)) and positioned on the lower molecular weight side) and $Mp_{_LOW}$ shown in FIG. 2(B) defined as the area of low molecular weight molecules $P_{_LOW}$. The content of medium molecular weight molecules $P_{_MID}$ is determined based on the area between $Mp_{_LOW}$ shown in FIG. 2(B) and $Mp_{_TROUGH}$ defined as the area of medium molecular weight molecules P $_{MID}$. Furthermore, the content of high molecular weight molecules P $_{HIGH}$ is determined based on the area between $Mp_{_TROUGH}$ shown in FIG. 2(B) and $Mp_{_1\%_HIGH}$ defined as the area of high molecular weight molecules $P_{_HIGH}$.

In an embodiment shown in FIG. 3(A) where a bimodal distribution is shown and the peak area on the higher molecular weight side is larger, the content of low molecular weight molecules $P_{_LOW}$ is determined based on the area between $Mp_{_1\%_LOW}$ (where $Mp_{_1\%_LOW}$ is a molecular weight corresponding to an intensity which is 1/100 of the maximum intensity ($S_{MID}$ in FIG. 3(B)) and positioned on the lower molecular weight side) and $Mp_{_TROUGH}$ shown in

FIG. 3(B) defined as the area of low molecular weight molecules $P_{_LOW}$. The content of medium molecular weight molecules $P_{_MID}$ is determined based on the area between $Mp_{_TROUGH}$ shown in FIG. 3(B) and $Mp_{_HIGH}$ defined as the area of medium molecular weight molecules $P_{_MID}$. Furthermore, the content of high molecular weight molecules $P_{HIGH}$ is determined based on the area between $Mp_{_HIGH}$ shown in FIG. 3(B) and $Mp_{_1\%_HIGH}$ defined as the area of high molecular weight molecules $P_{_HIGH}$.

As shown in FIG. 4(A) where the distribution is trimodal, the content of low molecular weight molecules $P_{_LOW}$ is determined based on the area between $Mp_{_1\%_LOW}$ (where $Mp_{_1\%_LOW}$ is a molecular weight corresponding to an intensity which is 1/100 of the maximum intensity ($S_{MID}$ in FIG. 4 (B)) and positioned on the lower molecular weight side) and $Mp_{_TROUGH_1}$ shown in FIG. 4 (B) defined as the area of low molecular weight molecules $P_{_LOW}$. The content of medium molecular weight molecules $P_{_MID}$ is determined based on the area between $Mp_{_TROUGH_1}$ and $Mp_{_TROUGH_2}$ shown in FIG. 4 (B) defined as the area of medium molecular weight molecules $P_{MID}$. Furthermore, the content of high molecular weight molecules $P_{_HIGH}$ is determined based on the area between $Mp_{_TROUGH_2}$ shown in FIG. 4(B) and $Mp_{_1\%_HIGH}$ defined as the area of high molecular weight molecules $P_{_HIGH}$.

As shown in FIG. 5(A) where the distribution is tetramodal, the content of low molecular weight molecules $P_{_LOW}$ is determined based on the area between $Mp_{_1\%_LOW}$ (where $Mp_{_1\%_LOW}$ is a molecular weight corresponding to an intensity which is 1/100 of the maximum intensity ($S_{MID}$ in FIG. 5(B)) and positioned on the lower molecular weight side) and $Mp_{_TROUGH_2}$ shown in FIG. 5 (B) defined as the area of low molecular weight molecules $P_{_LOW}$. The content of medium molecular weight molecules $P_{_MID}$ is determined based on the area between $Mp_{_TROUGH_2}$ and $Mp_{_TROUGH_3}$ shown in FIG. 5 (B) defined as the area of medium molecular weight molecules $P_{MID}$. Furthermore, the content of high molecular weight molecules $P_{_HIGH}$ is determined based on the area between $Mp_{_TROUGH_3}$ shown in FIG. 5 (B) and $Mp_{_1\%_HIGH}$ defined as the area of high molecular weight molecules $P_{_HIGH}$. In this case, the area can be calculated by monitoring the elution times corresponding to the molecular weights, and integrating over the elution times.

In the entire conjugated diene-based polymer according to the present invention, the vinyl bond content in the conjugated diene monomer units (such as isoprene monomer units and 1,3-butadiene monomer units) is preferably 1 to 90% by weight, more preferably 3 to 85% by weight, particularly preferably 5 to 80% by weight. By controlling the vinyl bond content in the conjugated diene monomer units in the entire conjugated diene-based polymer within these ranges, higher fuel efficiency can be provided.

The conjugated diene-based polymer according to the present invention has a Mooney viscosity ($ML_{1+4}$,100°C) of preferably 20 to 100, more preferably 30 to 90, particularly preferably 35 to 80. When the conjugated diene-based polymer is prepared into an oil extended rubber, it is preferred that the Mooney viscosity of the oil extended rubber be controlled to fall within these ranges.

Although the glass transition temperature (Tg) of the conjugated diene-based polymer according to the present invention is not particularly limited, it is preferably 20 to -110°C, more preferably 10°C to -70°C. The glass transition temperature of the conjugated diene-based rubber used in the present invention can be appropriately adjusted by adjusting the content of the aromatic vinyl monomer units in the conjugated diene-based polymer and the vinyl bond content in the conjugated diene monomer units.

<Method of preparing conjugated diene-based polymer>

The method of preparing the conjugated diene-based polymer according to the present invention comprises:

a first step of polymerizing a monomer containing a conjugated diene compound in an inert solvent in the presence of a polymerization initiator to prepare a solution containing polymer chains having an active terminal;
a second step of partially converting the polymer chains having an active terminal prepared in the first step into coupled polymer chains by a coupling reaction to prepare a solution containing the polymer chains having an active terminal and the coupled polymer chains; and
a third step of further polymerizing the polymer chains having an active terminal with a monomer containing the conjugated diene compound after the coupling reaction is performed in the second step,
wherein in at least one of the first step and the third step, the monomer used in polymerization is a monomer containing a vinyl compound having a functional group interactive with silica in addition to the conjugated diene compound.

The first step is a step of polymerizing a monomer containing a conjugated diene compound in an inert solvent in the presence of a polymerization initiator to prepare a solution containing polymer chains having an active terminal.

The inert solvent used in the polymerization can be any inert solvent usually used in solution polymerization as long as it does not inhibit the polymerization reaction. Specific examples of the inert solvent include linear or branched aliphatic hydrocarbons such as propane, n-butane, isobutane, n-pentane, isopentane, n-hexane, propene, 1-butene, isobutene, trans-2-butene, cis-2-butene, 1-pentene, 2-pentene, 1-hexene, 2-hexene, and n-heptane; alicyclic hydrocarbons such as cyclopentane and cyclohexane; aromatic hydrocarbons such as benzene, ethylbenzene, toluene, and xylene; ether compounds such as tetrahydrofuran and diethyl ether; and the like. These inert solvents may be used alone or in combination. The inert solvent can be used in any amount without limitation, for example, in an amount such that the monomer concentration is 1 to 50% by weight, preferably 5 to 40% by weight.

The polymerization initiator used in the polymerization can be any polymerization initiator as long as it can catalyze polymerization of the monomer containing a conjugated diene compound to give conjugated diene-based polymer chains having an active terminal. Specific examples thereof include polymerization initiators including organic alkali metal compounds, organic alkaline earth metal compounds, and lanthanum-series metal compounds as primary catalysts. Examples of organic alkali metal compounds include organic monolithium compounds such as n-butyllithium, sec-butyllithium, t-butyllithium, hexyllithium, phenyllithium, ethyllithium, n-propyllithium, isopropyllithium, tert-octyllithium, n-decyllithium, 2-naphthyllithium, 2-butylphenyllithium, 4-phenylbutyllithium, hexyllithium, cyclopentyllithium, the reaction product of diisopropenylbenzene with butyllithium, and stilbene lithium; organic polyvalent lithium compounds such as dilithiomethane, 1,4-dilithiobutane, 1,4-dilithio-2-ethylcyclohexane, 1,3,5-trilithiobenzene, 1,3,5-tris(lithiomethyl)benzene, the reaction product of sec-butyllithium with diisopropenylbenzene, the reaction products of n-butyllithium with 1,3-butadiene and divinylbenzene, and the reaction products of n-butyllithium with polyacetylene compounds; organic sodium compounds such as sodium naphthalene; organic potassium compounds such as potassium naphthalene; organic rubidium compounds; organic cesium compounds; and the like. Besides, examples thereof include alkoxides, sulfonates, carbonates, and amides of lithium, sodium, and potassium, and the like. These may also be used in combination with other organic metal compounds. Furthermore, known organic alkali metal compounds disclosed in U.S. Patent No. 5,708,092, British Patent No. 2,241,239, U.S. Patent No. 5,527,753, and the like can also be used.

The amount of the polymerization initiator to be used is not particularly limited, and is in the range of usually 1 to 50 mmol, preferably 1.2 to 20 mmol, more preferably 2 to 15 mmol per 1000 g of the monomer.

The polymerization temperature is in the range of usually -80 to +150°C, preferably 0 to 100°C, more preferably 30 to 90°C. The polymerization can be performed in any manner, that is, in batch or continuously. Preferred is a batch method when the conjugated diene compound and the aromatic vinyl compound are copolymerized, because randomness in bonding of conjugated diene monomer units and aromatic vinyl monomer units can be readily controlled. The bonding sequences of the monomers can be a variety of bonding sequences such as a block sequence, a tapered sequence, and a random sequence. Among these, preferred is a random sequence. Control to a random sequence results in a cross-linked rubber having further improved low heat buildup.

To adjust the vinyl bond content in the conjugated diene monomer units in the resulting conjugated diene-based polymer chains, a polar compound may be added to an inert organic solvent in the polymerization of the monomer containing a conjugated diene compound. Examples of the polar compound to be used include ether compounds, tertiary amines, phosphine compounds, alkali metal alkoxides, alkali metal phenoxides, and the like. Examples of ether compounds include cyclic ethers such as tetrahydrofuran, tetrahydropyran, and 1,4-dioxane; aliphatic monoethers such as diethyl ether and dibutyl ether; aliphatic diethers such as ethylene glycol dimethyl ether, ethylene glycol diethyl ether, and ethylene glycol dibutyl ether; aliphatic triethers such as diethylene glycol diethyl ether and diethylene glycol dibutyl ether; aromatic ethers such as diphenyl ether, anisole, 1,2-dimethoxybenzene, and 3,4-dimethoxytoluene; and the like. Examples of tertiary amines include triethylamine, tripropylamine, tributylamine, 1,1,2,2-tetramethylethylenediamine, N,N-diethylaniline, pyridine, quinoline, and the like. Examples of phosphine compounds include trimethylphosphine, triethylphosphine, triphenylphosphine, and the like. Examples of alkali metal alkoxides include sodium tert-butoxide, potassium tert-butoxide, sodium tert-pentoxide, potassium tert-pentoxide, and the like. Examples of alkali metal phenoxides include sodium phenoxide, potassium phenoxide, and the like. These polar compounds may be used alone or in combination. The amount of the polar compound to be used may be determined according to the target vinyl bond content, and is preferably 0.001 to 100 mol, more preferably 0.01 to 10 mol relative to 1 mol of the polymerization initiator. If the amount of the polar compound to be used falls within these ranges, the vinyl bond content in the conjugated diene monomer units is readily adjusted, and defects caused by deactivation of the polymerization initiator are obstructed.

In the first step, it is sufficient that the monomer to be used in the polymerization is a monomer containing at least the conjugated diene compound. Preferably, the monomer contains an aromatic vinyl compound to provide a conjugated diene-based polymer containing conjugated diene monomer units and aromatic vinyl monomer units. Furthermore, although the monomer used in the polymerization may contain the vinyl compound having a functional group interactive with silica, to further enhance the processability of the conjugated diene-based polymer, it is preferred that the vinyl compound having a functional group interactive with silica be used in the third step described later rather in the first step.

The second step is a step of partially converting the polymer chains having an active terminal prepared in the first step into coupled polymer chains by a coupling reaction to prepare a solution containing the polymer chains having an active terminal and the coupled polymer chains.

Examples of the coupling agent include, but should not be limited to, silicon tetrachloride, methyltrichlorosilane, dimethyldichlorosilane, trimethylchlorosilane, tin tetrachloride, methyltrichlorotin, dimethyldichlorotin, trimethylchlorotin,

tetramethoxysilane, methyltrimethoxysilane, dimethoxydimethylsilane, methyltriethoxysilane, ethyltrimethoxysilane, dimethoxydiethylsilane, diethoxydimethylsilane, tetraethoxysilane, ethyltriethoxysilane, diethoxydiethylsilane, bis(trichlorosilyl)methane, 1,2-bis(trichlorosilyl)ethane, 1,3-bis(trichlorosilyl)propane, 1,4-bis(trichlorosilyl)butane, 1,5-bis(trichlorosilyl)pentane, 1,6-bis(trichlorosilyl)hexane, and the like. Among these, preferred is use of a tri- or higher functional coupling agent, and more preferred is use of a tetra- or higher functional coupling agent because the resulting conjugated diene-based polymer has a shrinkage factor of high molecular weight molecules $P_{_HIGH}$ in a specific range and the mechanical properties can be appropriately enhanced while favorably suppressing a reduction in processability caused by an increase in molecular weight.

Although the amount of the coupling agent to be used is not particularly limited, from the viewpoint of coupling only part of the polymer chains having an active terminal prepared in the first step, the amount thereof is preferably less than 1 mol, more preferably 0.03 to 0.4 mol, still more preferably 0.05 to 0.3 mol in terms of the functional group(s) of the coupling agent relative to 1 mol of the polymerization initiator used in the first step. By controlling the amount of the coupling agent to be used within these ranges above, the fuel efficiency can be further enhanced. The addition of the coupling agent causes the coupling reaction of the active terminals in the polymer chains having an active terminal. Thereby, the coupled polymer chains lose their active terminals, and become the polymer chains without an active terminal.

The third step is a step of further polymerizing the polymer chains having an active terminal with a monomer containing the conjugated diene compound after the coupling reaction is performed in the second step.

The monomer to be used in the polymerization in the third step may be a monomer containing at least the conjugated diene compound. Preferably, the monomer contains an aromatic vinyl compound to provide a conjugated diene-based polymer containing conjugated diene monomer units and aromatic vinyl monomer units. Furthermore, the monomer used in the polymerization in the third step is preferably a monomer containing the vinyl compound having a functional group interactive with silica. If the vinyl compound having a functional group interactive with silica is used in the third step, units of the vinyl compound having a functional group interactive with silica can be preferentially introduced into polymer chains other than the coupled polymer chains in the second step. This can effectively increase the degree of adsorption of the polymer chains other than the coupled polymer chains onto silica, resulting in favorable processability and further enhanced fuel efficiency.

The polymerization in the third step can be performed in an inert solvent. The inert solvent is not particularly limited, and the same inert solvents as those exemplified in the first step described above can be used. The polymerization temperature and the polymerization manner are also not particularly limited, and may be the same as those described in the first step. The bonding sequence of the monomers can be a variety of bonding sequences such as a block sequence, a tapered sequence, and a random sequence. Among these, preferred is a random sequence. A random sequence results in a cross-linked rubber having further improved low heat buildup.

Furthermore, in the production method according to the present invention, preferably, the polymerization initiator is further added at any one of timings of during the polymerization in the first step, at the start of the polymerization in the third step, and during the polymerization in the third step. The timing to further add the polymerization initiator and the number of the additions of the polymerization initiator are not particularly limited, and may be determined according to the target molecular weight distribution of the conjugated diene-based polymer. In the production method according to the present invention, preferably, the polymerization initiator is further added at any one of timings of during the polymerization in the first step, at the start of the polymerization in the third step, and during the polymerization in the third step. More preferably, the polymerization initiator is further added at the start of the polymerization in the third step and during the polymerization in the third step. The amount of the polymerization initiator to be used is not particularly limited, and is preferably 0.1 to 0.7 mol, more preferably 0.2 to 0.6 mol relative to 1 mol of the polymerization initiator used at the start of the polymerization.

The first, second, and third steps are preferably continuously performed. For example, in a preferred embodiment, while the polymerization reaction in the first step is being continued, the coupling reaction is performed by adding the coupling agent in the second step, followed by the polymerization reaction in the third step.

After the polymerization reaction in the third step is completed, a polymerization terminator such as an alcohol (e.g., such as methanol, ethanol, or isopropanol) or water is added to the polymerization system to deactivate the active terminals, thereby giving a solution of the conjugated diene-based polymer.

An antioxidant such as a phenol-based stabilizer, a phosphorus-based stabilizer, or a sulfur-based stabilizer, a crumb forming agent, a scale inhibitor, and the like are added, as needed, to the reaction solution of the conjugated diene-based polymer prepared as above. Subsequently, the polymerization solvent is separated from the reaction solution by direct drying or steam stripping to recover a solid conjugated diene-based rubber. The conjugated diene-based polymer may be recovered as an oil extended rubber by further mixing an extender oil as needed. Examples of the extender oil include petroleum-based softening agents such as paraffin-based softening agents, aromatic softening agents, and naphthene-based softening agents, plant-derived softening agents, fatty acids, and the like. If a petroleum-based softening agent is used, the content of polycyclic aromatic compounds extracted by the method of IP346 (the test

method specified by THE INSTITUTE of PETROLEUM, UK) is preferably less than 3%. If the extender oil is used, the amount thereof to be used is usually 5 to 100 parts by weight relative to 100 parts by weight of the conjugated diene-based polymer.

Examples of a phenol-based stabilizer added to the solution of the conjugated diene-based polymer according to the present invention include 1'-hydroxy[2,2'-ethylidenebis[4,6-bis(1,1-dimethylpropyl)benzen]]-1-yl acrylate, 2-tert-butyl-4-methyl-6-(2-hydroxy-3-tert-butyl-5-methylbenzyl)phenyl acrylate, 2,6-di-tert-butyl-p-cresol, pentaerythritoltetrakis[3-(3,5-di-tert-butyl-4-hydroxyphenyl)propionate], octadecyl-3-(3,5-di-tert-butyl-4-hydroxyphenyl)-propionate, 4,6-bis(octathiomethyl)-o-cresol, and the like. Examples of a sulfur-based stabilizer include didodecyl-3,3'-thiodipropionate, bis[3-(dodecylthio)propionic acid]2,2-bis[[3-(dodecylthio)-1-oxopropyloxy]methyl]-1,3-propanediyl, ditridecyl-3,3'-thiodipropionate, and the like. Examples of a phosphorus-based stabilizer include tris(2,4-di-tert-butylphenyl)phosphite, and the like.

These stabilizers may be used alone or in combination. For example, the phenol-based stabilizer can be used in combination with another stabilizer. Examples of a combination of two stabilizers include a combination of 2-tert-butyl-4-methyl-6-(2-hydroxy-3-tert-butyl-5-methylbenzyl)phenyl acrylate with bis[3-(dodecylthio)propionic acid]2,2-bis[[3-(dodecylthio)-1-oxopropyloxy]methyl]-1,3-propanediyl, a combination of 1'-hydroxy[2,2'-ethylidenebis[4,6-bis(1,1-dimethylpropyl)benzen]]-1-yl acrylate with bis[3-(dodecylthio)propionic acid]2,2-bis[[3-(dodecylthio)-1-oxopropyloxy]methyl]-1,3-propanediyl, a combination of 4,6-bis(octathiomethyl)-o-cresol with 2,6-di-tert-butyl-p-cresol, a combination of 4,6-bis(octathiomethyl)-o-cresol with 2-tert-butyl-4-methyl-6-(2-hydroxy-3-tert-butyl-5-methylbenzyl)phenyl acrylate, a combination of 4,6-bis(octathiomethyl)-o-cresol with 1'-hydroxy[2,2'-ethylidenebis[4,6-bis(1,1-dimethylpropyl)benzen]]-1-yl acrylate, a combination of 4,6-bis(octathiomethyl)-o-cresol with bis[3-(dodecylthio)propionic acid]2,2-bis[[3-(dodecylthio)-1-oxopropyloxy]methyl]-1,3-propanediyl, a combination of 4,6-bis(octathiomethyl)-o-cresol with didodecyl-3,3'-thiodipropionate, and the like.

Examples of a combination of three stabilizers include a combination of 4,6-bis(octathiomethyl)-o-cresol with 1'-hydroxy[2,2'-ethylidenebis[4,6-bis(1,1-dimethylpropyl)benzen]]-1-yl acrylate and didodecyl-3,3'-thiodipropionate, a combination of 4,6-bis(octathiomethyl)-o-cresol with 2-tert-butyl-4-methyl-6-(2-hydroxy-3-tert-butyl-5-methylbenzyl)phenyl acrylate and bis[3-(dodecylthio)propionic acid]2,2-bis[[3-(dodecylthio)-1-oxopropyloxy]methyl]-1,3-propanediyl, a combination of 4,6-bis(octathiomethyl)-o-cresol with 2,6-di-tert-butyl-p-cresol and bis[3-(dodecylthio)propionic acid]2,2-bis[[3-(dodecylthio)-1-oxopropyloxy]methyl]-1,3-propanediyl, a combination of 4,6-bis(octathiomethyl)-o-cresol with 1'-hydroxy[2,2'-ethylidenebis[4,6-bis(1,1-dimethylpropyl)benzen]]-1-yl acrylate and bis[3-(dodecylthio)propionic acid]2,2-bis[[3-(dodecylthio)-1-oxopropyloxy]methyl]-1,3-propanediyl, and the like.

To further enhance the compatibility with a filler such as silica, the conjugated diene-based polymer according to the present invention may have polymer chain terminals modified with a heteroatom-containing functional group. The heteroatom-containing functional group may be a group containing a heteroatom. Preferred are groups containing at least one selected from the group consisting of nitrogen, oxygen, and silicon atoms as a heteroatom. From the viewpoint of the compatibility with silica, particularly preferred are groups containing a silicon atom.

For example, the heteroatom-containing functional group can be introduced into the polymer chain terminal of the conjugated diene-based rubber by reacting the heteroatom-containing compound with the active terminal of the conjugated diene-based polymer chain having an active terminal after the third step. Examples of the heteroatom-containing compound include compounds having a silicon atom. Preferred are alkoxysilane compounds or vinylsilane compounds, and more preferred are alkoxysilane compounds having an amino group or vinylsilane compounds having an amino group.

Examples of alkoxysilane compound having an amino group include [3-(dimethylamino)propyl]trimethoxysilane, [3-(diethylamino)propyl]trimethoxysilane, [3-(dimethylamino)propyl]triethoxysilane, [3-(diethylamino)propyl]triethoxysilane, [3-(ethylmethylamino)propylJtrimethoxysilane, [3-(ethylmethylamino)propyl]triethoxysilane, [3-(dimethylamino)propyl]methyldimethoxysilane, [3-(diethylamino)propyl]methyldimethoxysilane, [3-(dimethylamino)propyl]ethyldimethoxysilane, [3-(diethylamino)propyl]ethyldimethoxysilane, [(3-methyl-3-ethylamino)propyl]methyldimethoxysilane, [(3-methyl-3-ethylamino)propyl]ethyldimethoxysilane, [3-(dimethylamino)propyl]methyldiethoxysilane, [3-(diethylamino)propyl]methyldiethoxysilane, [3-(dimethylamino)propyl]ethyldiethoxysilane, [3-(diethylamino)propyl]ethyldiethoxysilane, [3-(ethylmethylamino)propyl]methyldiethoxysilane, [3-(ethylmethylamino)propyl]ethyldiethoxysilane, [3-(benzylmethylamino)propyl]trimethoxysilane, [3-(benzylmethylamino)propyl]triethoxysilane, {3-[di(methoxymethyl)amino]propyl]trimethoxysilane, {3-[di(methoxyethyl)amino]propyl}trimethoxysilane, {3-[di(methoxymethyl)amino]propyl}triethoxysilane, {3-[di(methoxyethyl)amino]propyl}triethoxysilane, {3-[di(ethoxyethyl)amino]propyl}trimethoxysilane, {3-[di(ethoxymethyl)amino]propyl}trimethoxysilane, {3-[di(ethoxyethyl)amino]propyl]triethoxysilane, {3-[di(ethoxymethyl)amino]propyl}triethoxysilane, {3-[N,N-bis(trimethylsilyl)amino]propyl}trimethoxysilane, {3-[N,N-bis(trimethylsilyl)amino]propylltriethoxysilane, {3-[N,N-bis(t-butyldimethylsilyl)amino]propyl}trimethoxysilane, {3-[N,N-bis(t-butyldimethylsilyl)amino]propyl}triethoxysilane, {3-[N,N-bis(trimethylsilyl)amino]propyl}methyldimethoxysilane, {3-[N,N-bis(trimethylsilyl)amino]propyl}methyldiethoxysilane, {3-[N,N-bis(t-butyldimethylsilyl)amino]propyl}methyldimethoxysilane, {3-[N,N-bis(t-butyldimethylsilyl)amino]propyl}methyldiethoxysilane, [3-(ethylmethylamino)propyl]trimethoxysilane,

[3-(ethylmethylamino)propyl]triethoxysilane, [3-(ethylmethylamino)propyl]methyldimethoxysilane, [3-(ethylmethylamino)propyl]ethyldimethoxysilane, [3-(ethylmethylamino)propyl]methyldiethoxysilane, [3-(ethylmethylamino)propyl]ethyldiethoxysilane, and the like.

Among these, [3-(dimethylamino)propyl]trimethoxysilane, [3-(diethylamino)propyl]trimethoxysilane, [3-(dimethylamino)propyl]triethoxysilane, and [3-(diethylamino)propyl]triethoxysilane are preferably used.

Examples of vinylsilane compounds having an amino group include bis(dimethylamino)methylvinylsilane, bis(diethylamino)methylvinylsilane, bis(n-propylamino)methylvinylsilane, bis(di(n-butyl)amino)methylvinylsilane, bis(dimethylamino)ethylvinylsilane, bis(diethylamino)ethylvinylsilane, bis(dipropylamino)ethylvinylsilane, bis(dibutylamino)ethylvinylsilane, and the like.

As a compound having a silicon atom, a siloxane compound can also be suitably used. The siloxane compound may be any siloxane compound as long as it has a main chain of siloxane bonds (-Si-O-) . Preferred are organosiloxanes having an organic group in a side chain, and more preferred is a polyorganosiloxane represented by General Formula (4):

[Chem. 4]

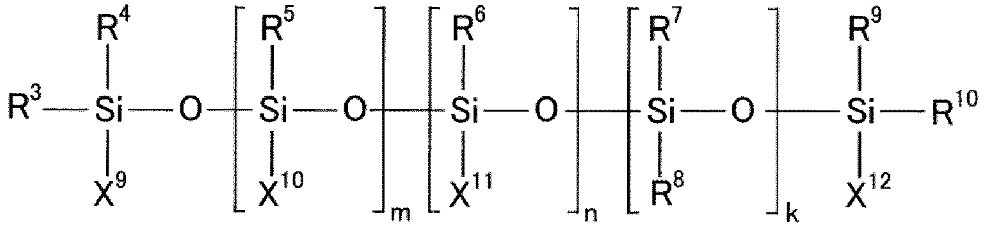

(4)

where $R^3$ to $R^{10}$ are a $C_1$ to $C_6$ alkyl group or a $C_6$ to $C_{12}$ aryl group, and these may be the same or different; $X^9$ and $X^{12}$ are any of those selected from the group consisting of $C_1$ to $C_6$ alkyl groups, $C_6$ to $C_{12}$ aryl groups, $C_1$ to $C_5$ alkoxy groups, and $C_4$ to $C_{12}$ groups having an epoxy group, and these may be the same or different; $X^{10}$ is a $C_1$ to $C_5$ alkoxy group or a $C_4$ to $C_{12}$ having an epoxy group, and when a plurality of $X^{10}$s is present, these may be the same or different; $X^{11}$ is a group containing 2 to 20 repeating units of an alkylene glycol, and when a plurality of $X^{11}$s is present, these may be the same or different; m is an integer of 1 to 200, n is an integer of 0 to 200, k is an integer of 0 to 200, and m + n + k is 1 or more.

In the polyorganosiloxane represented by General Formula (4), examples of the $C_1$ to $C_6$ alkyl groups which can form $R^3$ to $R^{10}$, $X^9$, and $X^{12}$ in General Formula (4) include a methyl group, an ethyl group, an n-propyl group, an isopropyl group, a butyl group, a pentyl group, a hexyl group, a cyclohexyl group, and the like. Examples of the $C_6$ to $C_{12}$ aryl groups include a phenyl group, a methylphenyl group, and the like. Among these, preferred are methyl and ethyl groups from the viewpoint of readiness of the production of the polyorganosiloxane itself.

In the polyorganosiloxane represented by General Formula (4), examples of the $C_1$ to $C_5$ alkoxy groups which can form $X^9$, $X^{10}$, and $X^{12}$ include a methoxy group, an ethoxy group, a propoxy group, an isopropoxy group, a butoxy group, and the like. Among these, preferred are methoxy and ethoxy groups from the viewpoint of readiness of the production of the polyorganosiloxane itself.

Furthermore, in the polyorganosiloxane represented by General Formula (4), examples of the $C_4$ to $C_{12}$ groups having an epoxy group which can form $X^9$, $X^{10}$, and $X^{12}$ include groups represented by General Formula (5) :

$$-Z^1-Z^2-E \qquad (5)$$

where $Z^1$ is a $C_1$ to $C_{10}$ alkylene or alkylarylene group, $Z^2$ is a methylene group, a sulfur atom, or an oxygen atom, and E is a $C_2$ to $C_{10}$ hydrocarbon group having an epoxy group.

The group represented by General Formula (5) is preferably those where $Z^2$ is an oxygen atom, more preferably those where $Z^2$ is an oxygen atom and E is a glycidyl group, particularly preferably those where $Z^1$ is a $C_1$ to $C_3$ alkylene group, $Z^2$ is an oxygen atom, and E is a glycidyl group.

In the polyorganosiloxane represented by General Formula (4), $X^9$ and $X^{12}$ are preferably a $C_4$ to $C_{12}$ group having an epoxy group or a $C_1$ to $C_6$ alkyl group among the groups described above. $X^{10}$ is preferably a $C_4$ to $C_{12}$ group having an epoxy group among the groups described above. Furthermore, it is more preferred that $X^9$ and $X^{12}$ be a $C_1$ to $C_6$ alkyl group and $X^{10}$ be a $C_4$ to $C_{12}$ group having an epoxy group.

In the polyorganosiloxane represented by General Formula (4), $X^{11}$, namely, the group containing 2 to 20 repeating units of an alkylene glycol is preferably a group represented by General Formula (6):

[Chem. 5]

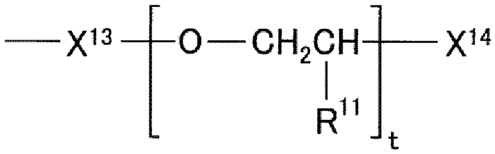

(6)

where t is an integer of 2 to 20, $X^{13}$ is a $C_2$ to $C_{10}$ alkylene or alkylarylene group, $R^{11}$ is a hydrogen atom or a methyl group, and $X^{14}$ is a $C_1$ to $C_{10}$ alkoxy or aryloxy group. Among these, preferred groups are those where t is an integer of 2 to 8, $X^{13}$ is a $C_3$ alkylene group, $R^{11}$ is a hydrogen atom, and $X^{14}$ is a methoxy group.

In the polyorganosiloxane represented by General Formula (4), m is an integer of 1 to 200, preferably 20 to 150, more preferably 30 to 120. At m of 1 to 200, the polyorganosiloxane itself represented by General Formula (4) can be more readily produced, and can be more easily handled because the viscosity is not excessively high.

In the polyorganosiloxane represented by General Formula (4), n is an integer of 0 to 200, preferably 0 to 150, more preferably 0 to 120. k is an integer of 0 to 200, preferably 0 to 150, more preferably 0 to 130. The total numeric value of m, n, and k is 1 or more, preferably 3 to 400, more preferably 20 to 300, particularly preferably 30 to 250. If the total numeric value of m, n, and k is 1 or more, the reaction of the polyorganosiloxane represented by General Formula (4) with the conjugated diene-based polymer chain having an active terminal readily proceeds. If the total numeric value of m, n, and k is 400 or less, the polyorganosiloxane itself represented by General Formula (4) can be more readily produced, and can be more easily handled because the viscosity is not excessively high.

Examples of a method of reacting the conjugated diene-based polymer chains having an active terminal with the heteroatom-containing compound include, but should not be limited to, a method of mixing these materials in a solvent which can dissolve the materials, and the like. The solvents which can be used in this mixing are the inert solvents exemplified as those used in the first step above. At this time, a method of adding the heteroatom-containing compound to the polymer solution prepared through the third step is simple and preferred. At this time, the heteroatom-containing compound may be dissolved in an inert solvent, and the solution may be added to the polymerization system. The reaction temperature is usually 0 to 120°C although not particularly limited. The reaction time is usually 1 minute to 1 hour although not particularly limited.

In the reaction of the conjugated diene-based polymer chains having an active terminal with the heteroatom-containing compound, the amount of the heteroatom-containing compound to be used is preferably 0.1 to 100 mol, more preferably 0.3 to 50 mol relative to 1 mol of the total amount of the polymerization initiator used in the polymerization. If the amount of the heteroatom-containing compound to be used falls within these ranges above, the fuel efficiency can be further enhanced.

<Conjugated diene-based polymer composition>

The conjugated diene-based polymer composition according to the present invention is a composition comprising the above-mentioned conjugated diene-based polymer according to the present invention and a filler.

The conjugated diene-based polymer composition according to the present invention may contain other polymers than the conjugated diene-based polymer according to the present invention described above. Examples of the other polymers include natural rubbers (those may be reformed natural rubbers such as epoxidized natural rubber (ENR), hydrogenated natural rubbers (HNR), deproteinized natural rubbers (DPNR), high purity natural rubbers (UPNR), grafted natural rubbers), polyisoprene rubbers, emulsion polymerized styrene-butadiene copolymer rubbers, solution polymerized styrene-butadiene copolymer rubbers, polybutadiene rubbers (those may be high-cis-BR or low-cis BR, or may be polybutadiene rubbers containing crystal fibers made of a 1,2-polybutadiene polymer), styreneisoprene copolymer rubbers, butadiene-isoprene copolymer rubbers, styreneisoprene-butadiene copolymer rubbers, acrylonitrile-butadiene copolymer rubbers, acrylonitrile-styrene-butadiene copolymer rubbers, butyl rubbers (IIR), ethylene-propylene copolymers, chloroprene rubbers, nitrile chloroprene rubbers, and nitrile isoprene rubbers, where the conjugated diene-based rubber is excluded. Among these, preferred are natural rubbers, polyisoprene rubbers, polybutadiene rubbers, and solution polymerized styrene-butadiene copolymer rubbers, and more preferred are natural rubbers. These polymers can be used alone or in combination, for example, as a combination of a natural rubber and a polybutadiene rubber, a combination of a natural rubber and a styrene-butadiene copolymer rubber, or the like.

In the conjugated diene-based polymer composition according to the present invention, the conjugated diene-based polymer according to the present invention occupies preferably 10 to 100% by weight, particularly preferably 50 to 100% by weight of the polymer ingredient in the conjugated diene-based polymer composition. The presence thereof in such a proportion in the conjugated diene-based rubber according to the present invention can provide sufficiently high fuel efficiency.

Examples of the filler include silica, calcium silicate, aluminum silicate, carbon black, calcium carbonate, talc, aluminum hydroxide, alumina, clay, mica, and the like. Among these, preferred are carbon black and silica, and more preferred is silica because these can further enhance the fuel efficiency. These can be used alone or in combination.

Examples of silica include dry white carbon, wet white carbon, colloidal silica, precipitated silica, calcium silicate, aluminum silicate, and the like. Among these, preferred is wet white carbon containing hydrous silicic acid as the main component. A carbon-silica dual phase filler comprising carbon black and silica carried on the surface thereof may also be used. These silicas may be used alone or in combination. The nitrogen adsorption specific surface area (measured by the BET method according to ASTM D3037-81) of the silica to be used is preferably 20 to 400 $m^2/g$, more preferably 50 to 220 $m^2/g$, particularly preferably 80 to 170 $m^2/g$. The silica preferably has a pH of 5 to 10.

As the silica, a variety of commercially available silicas can be used, for example. Examples thereof include "Hi-Sil210", "Hi-Sil233", and "Hi-Sil243LD" available from PPG Industries; "Zeosil 1115MP", "Zeosil 1165MP", and "Zeosil 165GR" available from Solvay S.A.; "ULTRASIL VN2" and "ULTRASIL VN3" available from EVONIK AG; "NIPSIL VN3", "NIPSIL AQ", "NIPSIL ER", and "NIPSIL RS-150" available from TOSOH SILICA CORPORATION; and the like.

Examples of carbon blacks include furnace black, acetylene black, thermal black, channel black, and graphite. Examples of channel black include EPC, MPC, and CC. Examples of furnace carbon black include SAF, ISAF, HAF, MAE, FEF, SRF, GPF, APF, FF, CF, SCF, and ECF. Examples of thermal black include FT and MT. These carbon blacks can be used alone or in combination.

The amount of the filler to be compounded with the conjugated diene-based polymer composition according to the present invention is preferably 10 to 250 parts by weight, more preferably 15 to 150 parts by weight, still more preferably 20 to 130 parts by weight relative to 100 parts by weight of the polymer ingredient in the conjugated diene-based polymer composition. By controlling the amount of silica to be compounded within these ranges above, the fuel efficiency can be further enhanced while sufficient processability is ensured.

To further improve the fuel efficiency, the conjugated diene-based polymer composition according to the present invention may be further compounded with a silane coupling agent. The silane coupling agent is not particularly limited, and a variety of silane coupling agents can be used. In the present invention, sulfide-based, mercapto-based, protected mercapto-based (such as those having a carbonylthio group), thiocyanate-based, vinyl-based, amino-based, methacrylate-based, glycidoxy-based, nitro-based, epoxy-based, or chloro-based silane coupling agents can be suitably used. Specific examples of silane coupling agents include bis(3-(triethoxysilyl)propyl)disulfide, bis(3-triethoxysilylpropyl)trisulfide, bis(3-(triethoxysilyl)propyl)tetrasulfide, γ-mercaptopropyltriethoxysilane, 3-[ethoxy-bis(3,6,9,12,15-pentaoxaoctacosan-1-yloxy)silyl]-1-propanethiol, 3-octanoylthio-1-propyl-triethoxysilane, 3-trimethoxysilylpropyl-N,N-dimethylthiocarbamoyl tetrasulfide, γ-trimethoxysilylpropylbenzothiazyl tetrasulfide, 3-trimethoxysilylpropylbenzothiazole tetrasulfide, 3-thiocyanate propyltriethoxysilane, vinyltriethoxysilane, N-(β-aminoethyl)-γ-arninopropyltrimethoxysilane, 3-trimethoxysilylpropylmethacrylate monosulfide, γ-glycidoxypropyltriethoxysilane, 3-nitropropyltrimethoxysilane, β-(3,4-epoxycyclohexyl)ethyltrimethoxysilane, 3-chloropropyltrimethoxysilane, and the like. NXT-Z100, NXT-Z30, NXT-Z45, NXT-Z60, NXT-Z45, and NXT available from Momentive Performance Materials Inc., and Si69, Si75, and VP Si363 available from Evonick Degussa AG can also be used. These silane coupling agents can be used alone or in combination. One or two or more of these silane coupling agents may be preliminarily formed into an oligomer, and may be used in the oligomer form. The amount of the silane coupling agent to be compounded is preferably 0.1 to 30 parts by weight, more preferably 1 to 15 parts by weight relative to 100 parts by weight of the filler.

Preferably, the conjugated diene-based polymer composition according to the present invention further contains a cross-linking agent. Examples of the cross-linking agent include sulfur, sulfur-containing compounds such as halogenated sulfur, organic peroxides, quinone dioximes, organic polyvalent amine compounds, alkyl phenol resins having a methylol group, and the like. Among these, sulfur is preferably used. The amount of the cross-linking agent to be compounded is preferably 0.1 to 15 parts by weight, more preferably 0.5 to 5 parts by weight, particularly preferably 1 to 4 parts by weight relative to 100 parts by weight of the polymer ingredient in the conjugated diene-based polymer composition.

Furthermore, besides the ingredients described above, the conjugated diene-based polymer composition according to the present invention can be compounded with a compounding agents such as a cross-linking accelerator, a cross-linking activator, an antioxidant, an activating agent, a process oil, a plasticizer, a lubricant, and a tackifier according to the normal method.

If sulfur or a sulfur-containing compound is used as the cross-linking agent, use in combination with a cross-linking accelerator and a cross-linking activator is preferred. Examples of the cross-linking accelerator include sulfenamide-based cross-linking accelerators; guanidine-based cross-linking accelerators; thiourea-based cross-linking accelerators; thiazole-based cross-linking accelerators; thiuram-based cross-linking accelerators; dithiocarbamic acid-based cross-linking accelerators; xanthic acid-based cross-linking accelerators; and the like. Among these, preferred are those containing sulfenamide-based cross-linking accelerators. These cross-linking accelerators are used alone or in combination. The amount of the cross-linking accelerator to be compounded is preferably 0.1 to 15 parts by weight, more preferably 0.5 to 5 parts by weight, particularly preferably 1 to 4 parts by weight relative to 100 parts by weight of the

polymer ingredient in the conjugated diene-based polymer composition.

Examples of the cross-linking activator include higher fatty acids such as stearic acid; zinc oxide; and the like. These cross-linking activators are used alone or in combination. The amount of the cross-linking activator to be compounded is preferably 0.05 to 20 parts by weight, particularly preferably 0.5 to 15 parts by weight relative to 100 parts by weight of the polymer ingredient in the conjugated diene-based polymer composition.

To obtain the conjugated diene-based polymer composition according to the present invention, the ingredients can be kneaded according to an ordinary method. For example, the target composition can be obtained by kneading ingredients excluding thermally unstable ingredients such as the cross-linking agent and the cross-linking accelerator with the conjugated diene-based rubber, and then mixing the thermally unstable ingredients such as the cross-linking agent and the cross-linking accelerator with the kneaded product. The kneading temperature during kneading of the ingredients excluding the thermally unstable ingredients with the conjugated diene-based rubber is preferably 80 to 200°C, more preferably 120 to 180°C, and the kneading time is preferably 30 seconds to 30 minutes. The kneaded product is mixed with the thermally unstable ingredients after it is cooled to usually 100°C or less, preferably 80°C or less.

<Cross-linked rubber>

The cross-linked rubber according to the present invention is prepared by cross-linking the above-mentioned conjugated diene-based polymer composition according to the present invention.

The cross-linked rubber according to the present invention can be produced using the conjugated diene-based polymer composition according to the present invention, for example, by shaping the rubber composition with a molding machine having a desired shape, such as an extruder, an injection molding machine, a press, or a roll, and performing a cross-linking reaction by heating to provide a cross-linked rubber having a fixed shape. In this case, the rubber composition may be preliminarily shaped and then cross-linked, or may be shaped and cross-linked at the same time. The shaping temperature is usually 10 to 200°C, preferably 25 to 120°C. The cross-linking temperature is usually 100 to 200°C, preferably 130 to 190°C, and the cross-linking time is usually 1 minute to 24 hours, preferably 2 minutes to 12 hours, particularly preferably 3 minutes to 6 hours.

Depending on the shape, the size, and the like thereof, the inside of the cross-linked rubber may not be sufficiently cross-linked, even when the surface thereof is cross-linked. For this reason, the cross-linked rubber may be further heated for secondary cross-linking.

As a heating method, a common method used to cross-link rubber such as press heating, steam heating, oven heating, or hot air heating can be appropriately selected.

The cross-linked rubber according to the present invention prepared as above has high fuel efficiency because it is prepared from the above-mentioned conjugated diene-based polymer according to the present invention. For this reason, owing to its high fuel efficiency, the cross-linked rubber according to the present invention can be used in a variety of applications to parts of tires such as cap treads, base treads, carcasses, sidewalls, and bead parts; materials for industrial products such as hoses, belts, mats, and antivibration rubbers; impact resistance improvers for resins; resin film buffer materials; shoe soles; rubber shoes; golf balls; toys; and the like, for example. In particular, because of its high fuel efficiency, the cross-linked rubber according to the present invention is suitable for the material for tires.

Examples

Hereinafter, the present invention will be described based on more detailed examples, but the present invention is not limited to these examples. Note that, in the examples, "parts" are based on weight unless otherwise indicated. Tests and evaluations conformed to the followings.

<1. Mooney viscosity ($ML_{1+4}$)>

The Mooney viscosity of each of conjugated diene-based polymers was measured at 100°C in accordance with JIS K6300 (1994).

<2. Contents of styrene units and vinyl bonds>

The content (% by weight) of styrene units in the conjugated diene-based polymer and the content (mol%) of vinyl bonds in the conjugated diene units were determined using $^1$H-NMR in accordance with JIS K6239 (2007).

<3. Weight average molecular weight (Mw)>

The weight average molecular weight (Mw) of the entire conjugated diene-based polymer was measured by

gel permeation chromatography (GPC) under the conditions (1) to (8) below.

(GPC apparatus and software)

(i) Liquid delivery pump: LC-20AD (available from Shimadzu Corporation)
(ii) Degasser: DGU-20A3 (available from Shimadzu Corporation)
(iii) Autosampler: SIL-20A HT (available from Shimadzu Corporation)
(iv) Column oven: CTO-20A (available from Shimadzu Corporation)
(v) Differential refractive index detector (RID): RID-10A (available from Shimadzu Corporation)
(vi) System controller: CBM-20A (available from Shimadzu Corporation)
(vii): Measurement and analysis software: LC solution ver. 1.24 SP1
(viii) Measurement conditions

GPC column: two PlusPore series Poly Pore 7.5 mm I.D. × 300 mm columns (available from Agilent Technologies, Inc.)
Mobile phase: 25 mg of 2-(ethylamino)ethanol (available from FUJIFILM Wako Chemical Corporation, special grade) was added to 3L of tetrahydrofuran (available from Kanto Chemical Co., Inc., special grade, stabilizer free).
Flow rate: 1 mL/min
Column oven temperature: 35°C
Detection: differential refractive index detector (RID)
RID cell temperature: 35°C
Sample solution injection amount: 100 μL
Standard substance for the calibration of the GPC column: PStQuick Kit-H (available from Tosoh Corporation)

(ix) Sample solution preparing conditions

Solvent: tetrahydrofuran (available from Kanto Chemical Co., Inc., special grade, stabilizer free)
Sample solution concentration: 0.5 mg/mL
Dissolving auto-agitator: DF-8020 (available from Tosoh Corporation)
Dissolution conditions: 10 mg of a sample and 20 mL of the solvent were added into a screw vial, and sealed tightly to be stirred at a stirring speed of 60 reciprocations/min at room temperature for 120 minutes by DF-8020. The stirred product was filtered by a syringe equipped with a filtering filter.
Filtering filter: Millex-LG, pore size of 0.2 um, hydrophilic, PTFE, filter diameter of 25 mm (available from Merck KGaA)

<4. Molecular weights of low molecular weight molecules $P_{_LOW}$, medium molecular weight molecules $P_{_MID}$, and high molecular weight molecules $P_{_HIGH}$>

Based on the GPC chart of each of the conjugated diene-based polymers obtained in "3. Weight average molecular weight (Mw)" described above, in accordance with the above-described method, the molecular weight $Mp_{_LOW}$ of low molecular weight molecules $P_{_LOW}$, the molecular weight $Mp_{_MID}$ of medium molecular weight molecules $P_{_MID}$, and the molecular weight $Mp_{_HIGH}$ of high molecular weight molecules $P_{_HIGH}$ were determined.

The conjugated diene-based polymers obtained in Synthesis Examples 1 to 5 and the conjugated diene-based polymers obtained by the mixing used in Examples 4 to 6 each had a trimodal distribution (i.e., they showed GPC charts as shown in FIGs. 4(A) and 4(B)). Accordingly, the molecular weights at the peak top of the peaks were defined sequentially from the lower molecular weight side as the molecular weight $Mp_{_LOW}$ of low molecular weight molecules $P_{_LOW}$, the molecular weight $Mp_{_MID}$ of medium molecular weight molecules $P_{_MID}$, and the molecular weight $Mp_{_HIGH}$ of high molecular weight molecules $P_{_HIGH}$.

<5. Contents of low molecular weight molecules $P_{_LOW}$, medium molecular weight molecules $P_{_MID}$, and high molecular weight molecules $P_{_HIGH}$>

Based on the GPC chart of each of the conjugated diene-based polymers obtained in "3. Weight average molecular weight (Mw)" described above, in accordance with the above-described method, the content of low molecular weight molecules $P_{_LOW}$, the content of medium molecular weight molecules $P_{_MID}$, and the content of high molecular weight molecules $P_{_HIGH}$ were determined.

The conjugated diene-based polymers obtained in Synthesis Examples 1 to 5 and the conjugated diene-based polymers obtained by the mixing used in Examples 4 to 6 each had a trimodal distribution (i.e., they showed GPC charts as shown in FIGs. 4(A) and 4(B)). Accordingly, the content of low molecular weight molecules $P_{_LOW}$ was calculated based on the area between $Mp_{_1\%_LOW}$ and $Mp_{_TROUGH_1}$ shown in FIG. 4 (B), the content of medium molecular weight molecules $P_{_MID}$ was calculated based on the area between $Mp_{_TROUGH_1}$ and $Mp_{_TROUGH_2}$ shown in FIG. 4(B), and the content of high molecular weight molecules $P_{_HIGH}$ was calculated based on the area between $Mp_{_TROUGH_2}$ shown in FIG. 4 (B) and $Mp_{_1\%HiGH}$.

<6. Shrinkage factors of medium molecular weight molecules $P_{_MID}$ and high molecular weight molecules $P_{_HIGH}$>

Each of the conjugated diene-based polymers was dissolved in tetrahydrofuran as a solvent in a concentration of 20 mg/10 ml, and measured using a GPC apparatus (3D-GPC) (available from Malvern Panalytical Ltd., trade name: "OMNISEC") equipped with a viscosity detector, a light scattering detector, and a RI detector. For the calibration of the light scattering detector (LS) and the viscosity detector (VISC) and the correction of the dwell volume between the detectors, Polycal TDS-PS-N (weight average molecular weight Mw: 104,349, polydispersity: 1.04), a polystyrene standard substance from Malvern Panalytical Ltd., was used as a 1 mg/ml solution. The refractive index increment (dn/dc) of the sample in tetrahydrofuran was defined as 0.152 ml/g. dn/dc of the polystyrene standard substance was defined as 0.185 ml/g. The absolute molecular weight and the intrinsic viscosity ([η], units in dl/g) were calculated using OmniSEC (version 4.7), data processing software from Malvern Panalytical Ltd. by reference to a document "Size Exclusion Chromatography, Springer(1999)". It is noted that the refractive index increment is a variation of the refraction index with the concentration change. The shrinkage factors $g'=[\eta]/[\eta]_0$ for the molecular weight $Mp_{_MID}$ of medium molecular weight molecules $P_{_MID}$ and the molecular weight $Mp_{_HIGH}$ of high molecular weight molecules $P_{_HIGH}$ measured using the light scattering detector (LS) were calculated from the measured intrinsic viscosity [η] obtained as above and a calculated intrinsic viscosity $[\eta]_0$ of the straight-chained polymer. Accordingly, the shrinkage factor g' of medium molecular weight molecules $P_{_MID}$ and the shrinkage factor g' of high molecular weight molecules $P_{_HIGH}$ were determined. Here, the intrinsic viscosity $[\eta]_0$ of the straight-chained polymer was calculated from the following expression, and used.

$$[\eta]_0 = 10^{-3.883} \times M^{0.771} \ (dl/g)$$

Here, M is an absolute molecular weight.

<Measurement conditions>

Measurement apparatus: OMNISEC available from Malvern Panalytical Ltd.
Detectors: light scattering detector, RI detector, UV detector, and viscosity detector
GPC column: TSKgel G4000HXL, TSKgel G5000HXL, and TSKgel G6000HXL available from Tosoh Corporation
Sample solution concentration: 20 mg/10 ml
Solvent: tetrahydrofuran (available from Kanto Chemical Co., Inc., special grade, stabilizer free)
Injection amount: 100 μl
Measurement temperature: 40°C
Dissolution conditions: stirring for 2 hours at room temperature
Mobile phase: tetrahydrofuran (available from Kanto Chemical Co., Inc., special grade, stabilizer free) containing 0.3 vol% of 2-ethylaminoethanol

Mobile phase flow rate: 1 ml/min

<7. Degrees of adsorption of medium molecular weight molecules $P_{_MID}$ and high molecular weight molecules $P_{_HIGH}$ onto silica>

Based on the GPC chart of each of the conjugated diene-based polymers obtained in "3. Weight average molecular weight (Mw)" described above, in accordance with the above-described method, the molecular weight range corresponding to medium molecular weight molecules $P_{_MID}$, and the molecular weight range corresponding to high molecular weight molecules $P_{_HIGH}$ were measured. The degrees of adsorption of medium molecular weight molecules $P_{_MID}$ and high molecular weight molecules $P_{_HIGH}$ onto silica were calculated using the result of the GPC measurement using a styrene-based column and the result of the GPC measurement using a silica-based column measured under

the conditions below. The conditions for the GPC measurement using the styrene-based column were as follows.

(GPC apparatus and software)

(i) Liquid delivery pump: LC-20AD (available from Shimadzu Corporation)
(ii) Degasser: DGU-20A3 (available from Shimadzu Corporation)
(iii) Autosampler: SIL-20A HT (available from Shimadzu Corporation)
(iv) Column oven: CTO-20A (available from Shimadzu Corporation)
(v) Differential refractive index detector (RID): RID-10A (available from Shimadzu Corporation)
(vi) System controller: CBM-20A (available from Shimadzu Corporation)
(vii): Measurement and analysis software: LC solution ver. 1.24 SP1
(viii) Measurement conditions

GPC column: two PlusPore series Poly Pore 7.5 mm I.D. × 300 mm columns (available from Agilent Technologies, Inc.)
Mobile phase: 25 mg of 2-(ethylamino)ethanol (available from FUJIFILM Wako Chemical Corporation, special grade) was added to 3L of tetrahydrofuran (available from Kanto Chemical Co., Inc., special grade, stabilizer free).
Flow rate: 1 mL/min
Column oven temperature: 35°C
Detection: Differential refractive index detector (RID)
RID cell temperature: 35°C
Sample solution injection amount: 100 uL
Calibration standard substance for GPC column: PStQuick Kit-H (available from Tosoh Corporation)

(ix) Sample solution preparing conditions

Solvent: 5 mg of standard polystyrene A5000 (available from Tosoh Corporation) having a molecular weight of 5000 was added as an internal standard to 20 mL of tetrahydrofuran (available from Kanto Chemical Co., Inc., special grade, stabilizer free).
Sample solution concentration: 0.5 mg/mL
Dissolving auto-agitator: DF-8020 (available from Tosoh Corporation)
Dissolution conditions: 10 mg of a sample and 20 mL of the solvent were added into a screw vial and sealed tightly to be stirred at a stirring speed of 60 reciprocations/min by DF-8020 at room temperature for 120 minutes. Filtration were performed by a syringe equipped with a filtering filter.
Filtering filter: Millex-LG, pore size of 0.2 pm, hydrophilic, PTFE, filter diameter of 25 mm (available from Merck KGaA)

The conditions for the GPC measurement using the silica-based column were defined as follows.

(GPC apparatus and software)

(i) Liquid delivery pump: LC-20AD (available from Shimadzu Corporation)
(ii) Degasser: DGU-20A3 (available from Shimadzu Corporation)
(iii) Autosampler: SIL-20A HT (available from Shimadzu Corporation)
(iv) Column oven: CTO-20A (available from Shimadzu Corporation)
(v) Differential refractive index detector (RID): RID-10A (available from Shimadzu Corporation)
(vi) System controller: CBM-20A (available from Shimadzu Corporation)
(vii): Measurement and analysis software: LC solution ver. 1.24 SP1
(viii) Measurement conditions

GPC column: one Zorbax PSM1000-S (6.2 × 250 mm, available from Agilent Technologies, Inc.) column, one Zorbax PSM-300 (6.2 × 250 mm, available from Agilent Technologies, Inc.) column, one Zorbax PSM60-S (6.2 × 250 mm, available from Agilent Technologies, Inc.) column
Mobile phase: tetrahydrofuran (available from Kanto Chemical Co., Inc., special grade, stabilizer free)

Flow rate: 0.7 mL/min
Column oven temperature: 35°C
Detection: differential refractive index detector (RID)
RID cell temperature: 35°C
Sample solution injection amount: 100 μL
Calibration standard substance for GPC column: PStQuick Kit-H (available from Tosoh Corporation)

(ix) Sample solution preparing conditions

Solvent: 5 mg of standard polystyrene A5000 (available from Tosoh Corporation) having a molecular weight of 5000 was added as an internal standard to 20 mL of tetrahydrofuran (available from Kanto Chemical Co., Inc., special grade, stabilizer free).
Sample solution concentration: 0.5 mg/mL
Dissolving auto-agitator: DF-8020 (available from Tosoh Corporation)
Dissolution conditions: 10 mg of a sample and 20 mL of the solvent were added into a screw vial and sealed tightly to be stirred at a stirring speed of 60 reciprocations/min by DF-8020 at room temperature for 120 minutes.
Filtration were performed by a syringe equipped with a filtering filter.
Filtering filter: Millex-LG, pore size of 0.2 um, hydrophilic, PTFE, filter diameter of 25 mm (available from Merck KGaA)

From the measurement results obtained, the degree of adsorption of medium molecular weight molecules $P_{_MID}$ onto silica was determined from the following formula (2) and the degree of adsorption of the high molecular weight molecules $P_{_HIGH}$ onto silica was determined from the following expression (3).

$$\text{Degree of adsorption (\%) of medium molecular weight molecules } P_{_MID} \text{ onto silica} = \{1 - (b_1 \times c_1)/(a_1 \times d_1)\} \times 100 \quad (2)$$

$a_1$: The area (%) of medium molecular weight molecules $P_{_MID}$ from the GPC measurement using the styrene-based column

$b_1$: The area (%) of the internal standard polystyrene using the styrene-based column
$c_1$: The area (%) of medium molecular weight molecules $P_{_MID}$ from the GPC measurement using the silica-based column
$d_1$: The area (%) of the internal standard polystyrene using the silica-based column

$$\text{Degree of adsorption (\%) of high molecular weight molecules } P_{_HIGH} \text{ onto silica} = \{1 - (b_2 \times c_2)/(a_2 \times d_2)\} \times 100 \quad (3)$$

$a_2$: The area (%) of high molecular weight molecules $P_{_HIGH}$ from the GPC measurement using the styrene-based column

$b_2$: The area (%) of the internal standard polystyrene using the styrene-based column
$c_2$: The area (%) of high molecular weight molecules $P_{_HIGH}$ from the GPC measurement using the silica-based column
$d_2$: The area (%) of the internal standard polystyrene using the silica-based column

The conjugated diene-based polymers obtained in Synthesis Examples 1 to 5 and the conjugated diene-based polymers obtained by the mixing used in Examples 4 to 6 each had a trimodal distribution (i.e., GPC charts as shown in FIGs. 4(A) and 4(B)). Accordingly, the area between $Mp_{_THOUGH_1}$ and $Mp_{_THROUGH_2}$ shown in FIG. 4(B) was defined as the area of medium molecular weight molecules $P_{_MID}$, and the area between $Mp_{_TROUGH_2}$ shown in FIG. 4(B) and $Mp_{_1\%}$ was defined as the area of high molecular weight molecules $P_{_HIGH}$.

<8. Compound Mooney viscosity ($ML_{1+4}$)>

The Mooney viscosities (compound Mooney viscosities) of the conjugated diene-based polymer compositions were measured at 100°C in accordance with JIS K6300 (1994).

<9. Fuel efficiency>

A strip of 1 or 2 mm width and 40 mm length was punched out as a test piece from a cross-linked rubber sheet, and was subjected to a test. The loss tangent (tanδ (30°C)) of the test piece was measured at 30°C at a frequency of 10 Hz, an initial elongation of 10%, and a strain amplitude of 0.25% by a viscoelasticity measurement apparatus (available from Ueshima Seisakusho Co., Ltd.)

[Synthesis Example 1]

A stainless-steel polymerization reactor equipped with a stirring device having an inner volume of 30 L was washed and dried. The inside atmosphere of the polymerization reactor was replaced with dry nitrogen. Subsequently, 12.24 kg of industrial hexane (available from Sumitomo Chemical Co., Ltd., trade name: Hexane (general product, 0.68 g/ml in density), 3.51 kg of cyclohexane, 608 g of 1,3-butadiene, 743 g of styrene, 9.12 mL of tetrahydrofuran, 0.75 mL of ethylene glycol diethyl ether, and 2.24 mL of ethylene glycol dibutyl ether were charged into the polymerization reactor. A small amount of n-butyllithium (n-BuLi) solution in hexane as a scavenger was then charged into the polymerization reactor in order to preliminarily detoxify impurities deactivating the polymerization initiator. Thereafter, an n-hexane solution containing 12.17 mmol of n-BuLi was charged into the polymerization reactor to initiate polymerization. During the polymerization reaction, the temperature inside the polymerization reactor was adjusted to 65°C, and the solution in the polymerization reactor was stirred at a stirring speed of 130 rmp. From 20 minutes after the initiation of the polymerization, 1,3-butadiene and styrene were continuously fed into the polymerization reactor.

After the 80-minute polymerization reaction, an n-hexane solution containing 1.17 mmol of silicon tetrachloride ($SiCl_4$) was charged into the polymerization reactor to continue the polymerization reaction for 10 minutes. An n-hexane solution containing 5.76 mmol of bis(diethylamino)methylvinylsilane and 2.52 mmol of n-BuLi were then charged into the polymerization reactor, and polymerized for 160 minutes. During the polymerization which was continued for 4 hours 40 minutes in total, 1,3-butadiene was continuously fed into the polymerization reactor over 200 minutes, and styrene over 115 minutes. The total fed amount of 1,3-butadiene was 1039 g, and that of styrene was 310 g.

While the temperature in the polymerization reactor was kept at 65°C, the polymerization solution in the polymerization reactor was stirred at a stirring speed of 130 rpm, and 15.01 mmol of [3-(diethylamino)propyl]trimethoxysilane as a modifying agent was added to the polymerization solution to be stirred for 15 minutes. An n-hexane solution containing 30.00 mmol of n-BuLi was then added to the polymerization solution to be stirred for 15 minutes. Subsequently, 20 mL of a hexane solution containing 2.8 mL of methanol was charged into the polymerization reactor, and the polymerization solution was stirred for 5 minutes.

The stirred product in the polymerization reactor was extracted, and a portion of the stirred product was dried at room temperature for 24 hours to evaporate most of volatile matter, followed by further vacuum drying at 55°C for 12 hours to obtain a polymer sample for a measurement. The vinyl bond content, the content of styrene units, the molecular weight (the weight average molecular weight (Mw), and the molecular weights of low molecular weight molecules $P_{_LOW}$, medium molecular weight molecules $P_{_MID}$, and high molecular weight molecules $P_{_HIGH}$), the shrinkage factors of medium molecular weight molecules $P_{_MID}$ and high molecular weight molecules $P_{_HIGH}$, and the degrees of adsorption of medium molecular weight molecules $P_{_MID}$ and high molecular weight molecules $P_{_HIGH}$ onto silica were measured. The results are shown in Table 1.

The stirred product in the polymerization reactor was extracted, and 10.8 g of 4,6-bis(octylthiomethyl)-o-cresol (available from BASF SE, trade name: Irganox 1520L, available from BASF SE) and 675 g of an extender oil (trade name "JOMO Process NC-140", available from Japan Energy Inc.) were added to the stirred product to obtain a mixture. Then, most of volatile matter in the obtained mixture was evaporated at room temperature in 24 hours, and the product was further vacuum dried at 55°C for 12 hours to obtain a conjugated diene-based polymer (A1).

[Synthesis Example 2]

A stainless-steel polymerization reactor equipped with a stirring device having an inner volume of 30 L was washed and dried. The inside atmosphere of the polymerization reactor was replaced with dry nitrogen. Subsequently, 12.24 kg of industrial hexane (available from Sumitomo Chemical Co., Ltd., trade name: Hexane (general product), 0.68 g/ml in density), 3.51 kg of cyclohexane, 608 g of 1,3-butadiene, 743 g of styrene, 9.12 mL of tetrahydrofuran, 0.75 mL of ethylene glycol diethyl ether, and 2.24 mL of ethylene glycol dibutyl ether were charged into the polymerization reactor.

A small amount of n-butyllithium (n-BuLi) solution in hexane as a scavenger was then charged into the polymerization reactor in order to preliminarily detoxify impurities deactivating the polymerization initiator. Thereafter, an n-hexane solution containing 10.27 mmol of n-BuLi was charged into the polymerization reactor to initiate polymerization. During the polymerization reaction, the temperature in the polymerization reactor was adjusted to 65°C, and the solution in the polymerization reactor was stirred at a stirring speed of 130 rmp. From 20 minutes after the initiation of the polymerization, 1,3-butadiene and styrene were continuously fed into the polymerization reactor.

After the 80-minute polymerization reaction, an n-hexane solution containing 0.65 mmol of 1,6-bis(trichlorosilyl)hexane was charged into the polymerization reactor to continue the polymerization reaction for 10 minutes. An n-hexane solution containing 5.76 mmol of bis(diethylamino)methylvinylsilane and 5.77 mmol of n-BuLi were then charged into the polymerization reactor, and polymerized for 160 minutes. During the polymerization which was continued for 4 hours 40 minutes in total, 1,3-butadiene was continuously fed into the polymerization reactor over 200 minutes, and styrene over 115 minutes. The total fed amount of 1,3-butadiene was 1039 g, and that of styrene was 310 g.

While the temperature in the polymerization reactor was kept at 65°C, the polymerization solution in the polymerization reactor was stirred at a stirring speed of 130 rpm, and 18.21 mmol of [3-(diethylamino)propyl]trimethoxysilane as a modifying agent was added to the polymerization solution to be stirred for 15 minutes. An n-hexane solution containing 36.40 mmol of n-BuLi was then added to the polymerization solution to be stirred for 15 minutes. Subsequently, 20 mL of a hexane solution containing 3.2 mL of methanol was charged into the polymerization reactor, and the polymerization solution was stirred for 5 minutes.

The stirred product in the polymerization reactor was extracted, and a portion of the stirred product was dried at room temperature for 24 hours to evaporate most of volatile matter, followed by further vacuum drying at 55°C for 12 hours to obtain a polymer sample for a measurement. The same measurements as those in Synthesis Example 1 were carried out. The results are shown in Table 1.

The stirred product in the polymerization reactor was extracted, and 10.8 g of 4,6-bis(octylthiomethyl)-o-cresol (available from BASF SE, trade name: Irganox 1520L, available from BASF SE) and 675 g of an extender oil (trade name "JOMO Process NC-140", available from Japan Energy Inc.) were added to the stirred product to obtain a mixture. Then, most of volatile matter in the obtained mixture was evaporated at room temperature in 24 hours, and the product was further vacuum dried at 55°C for 12 hours to obtain a conjugated diene-based polymer (A2).

[Synthesis Example 3]

A stainless-steel polymerization reactor equipped with a stirring device having an inner volume of 20 L was washed and dried. The inside atmosphere of the polymerization reactor was replaced with dry nitrogen. Subsequently, 8.16 kg of industrial hexane (available from Sumitomo Chemical Co., Ltd., trade name: Hexane (general product), 0.68 g/ml in density), 2.34 kg of cyclohexane, 405 g of 1,3-butadiene, 495 g of styrene, 6.08 mL of tetrahydrofuran, 0.50 mL of ethylene glycol diethyl ether, and 1.50 mL of ethylene glycol dibutyl ether were charged into the polymerization reactor. A small amount of n-butyllithium (n-BuLi) solution in hexane as a scavenger was then charged into the polymerization reactor in order to preliminarily detoxify impurities deactivating the polymerization initiator. Thereafter, an n-hexane solution containing 6.86 mmol of n-BuLi was charged into the polymerization reactor to initiate polymerization. During the polymerization reaction, the temperature in the polymerization reactor was adjusted to 65°C, and the solution in the polymerization reactor was stirred at a stirring speed of 130 rmp. From 20 minutes after the initiation of the polymerization, 1,3-butadiene and styrene were continuously fed into the polymerization reactor.

After the 80-minute polymerization reaction, an n-hexane solution containing 0.43 mmol of 1,6-bis(trichlorosilyl)hexane was charged into the polymerization reactor to continue the polymerization reaction for 10 minutes. An n-hexane solution containing 3.84 mmol of bis(diethylamino)methylvinylsilane and 3.84 mmol of n-BuLi were then charged into the polymerization reactor, and polymerized for 160 minutes. During the polymerization which was continued for 4 hours 50 minutes in total, 1,3-butadiene was continuously fed into the polymerization reactor over 200 minutes, and styrene over 115 minutes. The total fed amount of 1,3-butadiene was 693 g, and that of styrene was 207 g.

While the temperature in the polymerization reactor was kept at 65°C, the polymerization solution in the polymerization reactor was stirred at a stirring speed of 130 rpm, and 3.24 mmol of 2-butanol was added to the polymerization solution to be stirred for 15 minutes. 7.29 mmol of [3-(diethylamino)propyl]trimethoxysilane as a modifying agent was then added to the polymerization solution to be stirred for 15 minutes. Thereafter, an n-hexane solution containing 14.6 mmol of n-BuLi was added to the polymerization solution to be stirred for 15 minutes. Subsequently, 20 mL of a hexane solution containing 1.6 mL of methanol was charged into the polymerization reactor, and the polymerization solution was stirred for 5 minutes.

The stirred product in the polymerization reactor was extracted, and a portion of the stirred product was dried at room temperature for 24 hours to evaporate most of volatile matter, followed by further vacuum drying at 55°C for 12 hours to obtain a polymer sample for a measurement. The same measurements as those in Synthesis Example 1 were carried out. The results are shown in Table 1.

The stirred product in the polymerization reactor was extracted, and 7.2 g of 4,6-bis(octylthiomethyl)-o-cresol (available from BASF SE, trade name: Irganox 1520L, available from BASF SE) and 450 g of an extender oil (trade name "JOMO Process NC-140", available from Japan Energy Inc.) were added to the stirred product to obtain a mixture. Then, most of volatile matter in the obtained mixture was evaporated at room temperature in 24 hours, and the product was further vacuum dried at 55°C for 12 hours to obtain a conjugated diene-based polymer (A3).

[Synthesis Example 4]

A stainless-steel polymerization reactor equipped with a stirring device having an inner volume of 20 L was washed and dried. The inside atmosphere of the polymerization reactor was replaced with dry nitrogen. Subsequently, 8.16 kg of industrial hexane (available from Sumitomo Chemical Co., Ltd., trade name: Hexane (general product), 0.68 g/ml in density), 2.34 kg of cyclohexane, 405 g of 1,3-butadiene, 495 g of styrene, 6.08 mL of tetrahydrofuran, 0.50 mL of ethylene glycol diethyl ether, and 1.50 mL of ethylene glycol dibutyl ether were charged into the polymerization reactor. A small amount of n-butyllithium (n-BuLi) solution in hexane as a scavenger was then charged into the polymerization reactor in order to preliminarily detoxify impurities deactivating the polymerization initiator. Thereafter, an n-hexane solution containing 1.25 mmol of n-BuLi was charged into the polymerization reactor to initiate polymerization. During the polymerization reaction, the temperature in the polymerization reactor was adjusted to 65°C, and the solution in the polymerization reactor was stirred at a stirring speed of 130 rmp. From 20 minutes after the initiation of the polymerization, 1,3-butadiene and styrene were continuously fed into the polymerization reactor.

After the 40-minute polymerization reaction, an n-hexane solution containing 3.75 mmol of n-BuLi was charged into the polymerization reactor to continue the polymerization reaction for 35 minutes. 3.84 mmol of bis(diethylamino)methylvinylsilane was then charged into the polymerization reactor, and polymerized for 35 minutes. Thereafter, an n-hexane solution containing 5.00 mmol of n-BuLi was charged into the polymerization reactor to continue the polymerization reaction for 140 minutes. During the polymerization which was continued for 4 hours 40 minutes in total, 1,3-butadiene was continuously fed into the polymerization reactor over 200 minutes, and styrene over 115 minutes. The total fed amount of 1,3-butadiene was 693 g, and that of styrene was 207 g.

While the temperature in the polymerization reactor was kept at 65°C, the polymerization solution in the polymerization reactor was stirred at a stirring speed of 130 rpm, and 15.0 mmol of [3-(diethylamino)propyl]trimethoxysilane as a modifying agent was added to the polymerization solution to be stirred for 15 minutes. An n-hexane solution containing 26.25 mmol of n-BuLi was then added to the polymerization solution to be stirred for 15 minutes. Subsequently, 20 mL of a hexane solution containing 2.23 mL of methanol was charged into the polymerization reactor, and the polymerization solution was stirred for 5 minutes.

The stirred product in the polymerization reactor was extracted, and a portion of the stirred product was dried at room temperature for 24 hours to evaporate most of volatile matter, followed by further vacuum drying at 55°C for 12 hours to obtain a polymer sample for a measurement. The same measurements as those in Synthesis Example 1 were carried out. The results are shown in Table 1.

The stirred product in the polymerization reactor was extracted, and 7.2 g of 4,6-bis(octylthiomethyl)-o-cresol (available from BASF SE, trade name: Irganox 1520L, available from BASF SE) and 450 g of an extender oil (trade name "JOMO Process NC-140", available from Japan Energy Inc.) were added to the stirred product to obtain a mixture. Then, most of volatile matter in the obtained mixture was evaporated at room temperature in 24 hours, and the product was further vacuum dried at 55°C for 12 hours to obtain a conjugated diene-based polymer (B1).

[Synthesis Example 5]

A stainless-steel polymerization reactor equipped with a stirring device having an inner volume of 20 L was washed and dried. The inside atmosphere of the polymerization reactor was replaced with dry nitrogen. Subsequently, 8.16 kg of industrial hexane (available from Sumitomo Chemical Co., Ltd., trade name: Hexane (general product), 0.68 g/ml in density), 2.34 kg of cyclohexane, 405 g of 1,3-butadiene, 495 g of styrene, 6.08 mL of tetrahydrofuran, 0.50 mL of ethylene glycol diethyl ether, and 1.50 mL of ethylene glycol dibutyl ether were charged into the polymerization reactor. A small amount of n-butyllithium (n-BuLi) solution in hexane as a scavenger was then charged into the polymerization reactor in order to preliminarily detoxify impurities deactivating the polymerization initiator. Thereafter, an n-hexane solution containing 1.25 mmol of n-BuLi was charged into the polymerization reactor to initiate polymerization. During the polymerization reaction, the temperature in the polymerization reactor was adjusted to 65°C, and the solution in the polymerization reactor was stirred at a stirring speed of 130 rmp. From 20 minutes after the initiation of the polymerization, 1,3-butadiene and styrene were continuously fed into the polymerization reactor.

After the 40-minute polymerization reaction, an n-hexane solution containing 3.75 mmol of n-BuLi was charged into the polymerization reactor to continue the polymerization for 35 minutes. 3.84 mmol of bis(diethylamino)methylvinylsilane was then charged into the polymerization reactor, and polymerized for 35 minutes. Thereafter, an n-hexane

solution containing 5.00 mmol of n-BuLi was charged into the polymerization reactor to continue the polymerization reaction for 140 minutes. During the polymerization which was continues for 4 hours 40 minutes in total, 1,3-butadiene was continuously fed into the polymerization reactor over 200 minutes, and styrene over 115 minutes. The total fed amount of 1,3-butadiene was 693 g, and that of styrene was 207 g.

While the temperature in the polymerization reactor was kept at 65°C, the polymerization solution in the polymerization reactor was stirred at a stirring speed of 130 rpm, and 20.0 mmol of [3-(diethylamino)propyl]trimethoxysilane as a modifying agent was added to the polymerization solution to be stirred for 15 minutes. An n-hexane solution containing 26.25 mmol of n-BuLi was then added to the polymerization solution to be stirred for 15 minutes. Subsequently, 20 mL of a hexane solution containing 2.77 mL of methanol was charged into the polymerization reactor, and the polymerization solution was stirred for 5 minutes.

The stirred product in the polymerization reactor was extracted, and a portion of the stirred product was dried at room temperature for 24 hours to evaporate most of volatile matter, followed by further vacuum drying at 55°C for 12 hours to obtain a polymer sample for a measurement. The same measurements as those in Synthesis Example 1 were carried out. The results are shown in Table 1.

The stirred product in the polymerization reactor was extracted, and divided into two halves such that the weights were the same. 3.6 g of 4,6-bis(octylthiomethyl)-o-cresol (available from BASF SE, trade name: Irganox 1520L, available from BASF SE) and 225 g of an extender oil (trade name "JOMO Process NC-140", available from Japan Energy Inc.) were added to one half of the stirred product to obtain a mixture. Then, most of volatile matter in the obtained mixture was evaporated at room temperature in 24 hours, and the product was further vacuum dried at 55°C for 12 hours to obtain a conjugated diene-based polymer (B2).

[Synthesis Example 6]

3.6 g of Irganox 1520L (Irganox 1520L: 4,6-bis(octylthiomethyl)-o-cresol, available from BASF SE), 1.8 g of "Sumilizer GM (2-tert-butyl-4-methyl-6-(2-hydroxy-3-tert-butyl-5-methylbenzyl)phenyl acrylate, available from Sumitomo Chemical Co., Ltd.", 0.9 g of "Sumilizer TP-D (bis[3-(dodecylthio)propionic acid]2,2-bis[[3-(dodecylthio)-1-oxopropyloxy]methyl]-1,3-propanediyl, available from Sumitomo Chemical Co., Ltd.", and 225 g of an extender oil (trade name "JOMO Process NC-140", available from Japan Energy Inc.) were added to the other half of the stirred product divided into two halves in Synthesis Example 5 described above to obtain a mixture. Most of volatile matter in the mixture was evaporated at room temperature in 24 hours, and the product was further vacuum dried at 55°C for 12 hours to obtain a conjugated diene-based polymer (B3).

The characteristics and the like of the conjugated diene-based polymers obtained in Synthesis Examples 1 to 6 are shown in Table 1.

[Table 1]

Table 1

| | Synthesis Example 1 | Synthesis Example 2 | Synthesis Example 3 | Synthesis Example 4 | Synthesis Example 5 | Synthesis Example 6 |
|---|---|---|---|---|---|---|
| Type of polymer | (A1) | (A2) | (A3) | (B1) | (B2) | (B3) |
| Content (wt%) of styrene units | 39 | 39 | 39 | 39 | 39 | 39 |
| Content (mol%) of vinyl bonds | 38 | 37 | 38 | 38 | 37 | 37 |
| Mooney viscosity ($ML_{1+4}$) | 45 | 38 | 35 | 48 | 51 | 51 |
| Weight average molecular weight Mw (x $10^4$) | 48.2 | 48.9 | 47.3 | 39 | 55.6 | 55.6 |
| Type of molecular weight distribution | Trimodal | Trimodal | Trimodal | Trimodal | Trimodal | Trimodal |
| Molecular weight $Mp_{_HIGH}$ of high molecular weight molecules $P_{_HIGH}$ (x $10^4$) | 16.1 | 120.4 | 107.2 | 75.8 | 100.7 | 100.7 |

(continued)

| | Synthesis Example 1 | Synthesis Example 2 | Synthesis Example 3 | Synthesis Example 4 | Synthesis Example 5 | Synthesis Example 6 |
|---|---|---|---|---|---|---|
| Type of polymer | (A1) | (A2) | (A3) | (B1) | (B2) | (B3) |
| Content (wt%) of high molecular weight molecules $P_{_HIGH}$ | 40 | 28 | 23 | 35 | 49 | 49 |
| Molecular weight $Mp_{_MID}$ of medium molecular weight molecules $P_{_MID}$ (x $10^4$) | 38.8 | 42.9 | 36.9 | 34.4 | 34.2 | 34.2 |
| Content (wt%) of medium molecular weight molecules $P_{_MID}$ | 50 | 56 | 62 | 53 | 39 | 39 |
| Molecular weight $Mp_{_LOW}$ of low molecular weight molecules $P_{_LOW}$ (x $10^4$) | 14.5 | 12.5 | 10.6 | 7.2 | 15.2 | 15.2 |
| Content (wt%) of low molecular weight molecules $P_{_LOW}$ | 10 | 16 | 15 | 12 | 12 | 12 |
| Shrinkage factor of high molecular weight molecules $P_{_HIGH}$ | 0.73 | 0.47 | 0.44 | 0.83 | 0.93 | 0.93 |
| Shrinkage factor of medium molecular weight molecules $P_{_MID}$ | 0.91 | 0.86 | 0.86 | 0.87 | 0.87 | 0.87 |
| Degree of adsorption (%) of high molecular weight molecules $P_{_HIGH}$ onto silica | 40.0 | 20.4 | 11.4 | 80.0 | 90.9 | 90.9 |
| Degree of adsorption (%) of medium molecular weight molecules $P_{_MID}$ onto silica | 78.7 | 73.2 | 46.5 | 71.2 | 87.0 | 87.0 |

<Preparation of conjugated diene-based polymer composition and production of cross-linked rubber sheet>

The ingredients except for sulfur and the vulcanization accelerator were kneaded at 150°C for 5 minutes by a lab plast mill in proportional amounts (parts by weight) shown in Table 2 to prepare conjugated diene-based polymer compositions according to Examples 1 to 6 and Comparative Examples 1 to 3. The compound Mooney viscosity of each of the obtained conjugated diene-based polymer compositions was measured in accordance with the above method. The results are shown in Table 2. In each of Examples 4 to 6 using a mixture of two types of conjugated diene-based polymers, another batch of the mixture of two types of conjugated diene-based polymers was prepared, and measured for the shrinkage factors of medium molecular weight molecules $P_{_MID}$ and high molecular weight molecules $P_{_HIGH}$, and the degrees of adsorption of medium molecular weight molecules $P_{_MID}$ and high molecular weight molecules $P_{_HIGH}$ onto silica in accordance with the above methods.

In the next step, the conjugated diene-based polymer compositions obtained each were added with sulfur and the vulcanization accelerator to be formed into sheets at 50°C using a 6-inch roll. The sheets were heated at 160°C for 35 to 40 minutes to be cross-linked. The cross-linked rubber sheets according to Examples 1 to 6 and Comparative Examples 1 to 3 were thus prepared. The results are shown in Table 2.

[Table 2]

Table 2

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Physical properties of conjugated diene-based polymer | Type of molecular weight distribution | Trimodal | Trimodal | Trimodal | Trimodal | Trimodal | Trimodal | Trimodal | Trimodal | Trimodal |
| | Shrinkage factor of high molecular weight molecules $P_{_HIGH}$ | 0.73 | 0.47 | 0.44 | 0.57 | 0.62 | 0.43 | 0.83 | 0.93 | 0.93 |
| | Shrinkage factor of medium molecular weight molecules $P_{_MID}$ | 0.91 | 0.86 | 0.86 | 0.9 | 0.89 | 0.86 | 0.87 | 0.87 | 0.87 |
| | Degree of adsorption (%) of high molecular weight molecules $P_{_HIGH}$ onto silica | 40 | 20.4 | 11.4 | 50.2 | 67.8 | 13.4 | 80 | 90.9 | 90.9 |
| | Degree of adsorption (%) of medium molecular weight molecules $P_{_MID}$ onto silica | 78.7 | 73.2 | 46.5 | 58.3 | 81.5 | 52.9 | 71 | 90.9 | 90.9 |

(continued)

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Components (parts) | Conjugated diene-based polymer (A1) | 125 | - | - | - | - | - | - | - | - |
| | Conjugated diene-based polymer (A2) | - | 125 | - | - | 75 | 25 | - | - | - |
| | Conjugated diene-based polymer (A3) | - | - | 125 | 100 | - | 100 | - | - | - |
| | Conjugated diene-based polymer (B1) | - | - | - | - | - | - | 125 | - | - |
| | Conjugated diene-based polymer (B2) | - | - | - | 25 | 50 | - | - | 125 | - |
| | Conjugated diene-based polymer (B3) | - | - | - | - | - | - | - | - | 125 |
| | Silica | 80 | 80 | 80 | 80 | 80 | 80 | 80 | 80 | 80 |
| | Oil | 10 | 10 | 10 | 10 | 10 | 10 | 10 | 10 | 10 |
| | Silane coupling agent | 6.4 | 6.4 | 6.4 | 6.4 | 6.4 | 6.4 | 6.4 | 6.4 | 6.4 |
| | Carbon black | 5 | 5 | 5 | 5 | 5 | 5 | 5 | 5 | 5 |
| | Zinc oxide | 3 | 3 | 3 | 3 | 3 | 3 | 3 | 3 | 3 |
| | Antioxidant | 2 | 2 | 2 | 2 | 2 | 2 | 2 | 2 | 2 |
| | Stearic acid | 2 | 2 | 2 | 2 | 2 | 2 | 2 | 2 | 2 |
| | Wax | 2 | 2 | 2 | 2 | 2 | 2 | 2 | 2 | 2 |
| | Processing aid | 1 | 1 | 1 | 1 | 1 | 1 | 1 | 1 | 1 |
| | Sulfur | 1.5 | 1.5 | 1.5 | 1.5 | 1.5 | 1.5 | 1.5 | 1.5 | 1.5 |
| | Vulcanization accelerator (1) | 1.5 | 1.5 | 1.5 | 1.5 | 1.5 | 1.5 | 1.5 | 1.5 | 1.5 |
| | Vulcanization accelerator (2) | 2 | 2 | 2 | 2 | 2 | 2 | 2 | 2 | 2 |

(continued)

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Evaluations | Compound Mooney viscosity (A) ($ML_{1-4}$) | 51 | 49 | 42 | 44 | 51 | 45 | 55 | 57 | 59 |
| | Fuel efficiency performance (B) | 0.174 | 0.172 | 0.188 | 0.184 | 0.177 | 0.182 | 0.180 | 0.172 | 0.167 |
| | (A) x (B) | 8.874 | 8.428 | 7.896 | 8.096 | 9.027 | 8.190 | 9.900 | 9.804 | 9.853 |
| | (A) x (B) (index) | 112 | 117 | 125 | 122 | 110 | 121 | 100 | 101 | 100 |

The ingredients shown in Table 2 are as follows.

- Silica: available from EVONIK AG, trade name "Ultrasil VN3-GR"
- Oil: available from JXTG Energy Corporation, trade name "JOMO Process NC-140"
- Silane coupling agent: bis(3-(triethoxysilyl)propyl)tetrasulfide) (available from Degussa Company, trade name "Si 69")
- Carbon black: available from Cabot Japan K.K., trade name "N339"
- Zinc oxide: available from Seido Chemical Industry Co., Ltd., trade name "Zinc oxide II"
- Antioxidant: 6PPD, N-phenyl-N'-(1,3-dimethylbutyl)-p-phenylenediamine, available from Ouchi Shinko Chemical Industrial Co., Ltd., trade name "NOCRAC 6C"
- Stearic acid: trade name "BEAD STEARIC ACID CAMELLIA" available from NOF CORPORATION
- Wax: available from Ouchi Shinko Chemical Industrial Co., Ltd., trade name "SUNNOCK N"
- Processing aid: available from Struktol Company, trade name "STRUKTOL EF44"
- Vulcanization accelerator (1): available from Ouchi Shinko Chemical Industrial Co., Ltd., the trade name of N-cyclohexyl-2-benzothiazolylsulfenamide, NOCCELER CZ-G
- Vulcanization accelerator (2): diphenylguanidine (available from Ouchi Shinko Chemical Industrial Co., Ltd., trade name "NOCCELER D")
- Sulfur: available from Tsurumi Chemical Industry Co., Ltd., trade name "Sulfur 325 mesh"

The results of the compound Mooney viscosity (A) and the fuel efficiency performance (B) of Examples and Comparative Examples are shown in Table 2. A smaller value of the compound Mooney viscosity (A) indicates higher processability. A smaller value of the fuel efficiency performance (B) indicates higher fuel efficiency.

In addition, as shown in Table 2, the conjugated diene-based polymers having a shrinkage factor of high molecular weight molecules $P_{_HIGH}$ of 0.4 to 0.8, a degree of adsorption of high molecular weight molecules $P_{_HIGH}$ onto silica of 75% or lower, and a degree of adsorption of medium molecular weight molecules $P_{_MID}$ onto silica of 40 to 100% each had a low value ((A) × (B)) obtained by multiplying the compound Mooney viscosity (A) of the conjugated diene-based polymer composition prepared by compounding silica or the like as a filler and the fuel efficiency performance (B) of the resulting cross-linked rubber, and had excellent processability and excellent fuel efficiency in a balanced way (Examples 1 to 6).

Meanwhile, the conjugated diene-based polymers having a shrinkage factor of high molecular weight molecules $P_{_HIGH}$ of greater than 0.8, a degree of adsorption of high molecular weight molecules $P_{_HIGH}$ onto silica of greater than 75% each had a high value ((A) × (B)) obtained by multiplying the compound Mooney viscosity (A) and the fuel efficiency performance (B), and had poor processability and poor fuel efficiency (Comparative Examples 1 to 3).

Each value ((A) × (B)) obtained by multiplying the compound Mooney viscosity (A) and the fuel efficiency performance (B) is shown as an index (a higher index indicates a better property) in which the result of Comparative Example 1 is defined as 100 in Table 2.

## Claims

1. A conjugated diene-based polymer comprising at least conjugated diene monomer units, and having a shrinkage factor of high molecular weight molecules of 0.4 to 0.8, a degree of adsorption of high molecular weight molecules onto silica of 75% or less, and a degree of adsorption of medium molecular weight molecules onto silica of 40 to 100%.

2. The conjugated diene-based polymer according to claim 1, wherein the shrinkage factor of medium molecular weight molecules is 0.8 to 1.2.

3. The conjugated diene-based polymer according to claim 1 or 2, wherein the degree of adsorption of high molecular weight molecules onto silica is 10 to 70%.

4. The conjugated diene-based polymer according to any one of claims 1 to 3, wherein the conjugated diene-based polymer has two or more peak values of molecular weight.

5. The conjugated diene-based polymer according to any one of claims 1 to 4, wherein the conjugated diene-based polymer is a copolymer containing the conjugated diene monomer units and aromatic vinyl monomer units.

6. The conjugated diene-based polymer according to any one of claim 1 to 5, wherein the molecular weight $Mp_{_Low}$ of low molecular weight molecules is in the range of 70,000 to 190,000.

**7.** A conjugated diene-based polymer composition comprising the conjugated diene-based polymer according to any one of claims 1 to 6, and a filler.

**8.** A cross-linked rubber prepared by cross-linking the conjugated diene-based polymer composition according to claim 7.

**9.** A tire comprising the cross-linked rubber according to claim 8.

**10.** A method of preparing a conjugated diene-based polymer, comprising:

a first step of polymerizing a monomer containing a conjugated diene compound in an inert solvent in the presence of a polymerization initiator to prepare a solution containing polymer chains having an active terminal;
a second step of partially converting the polymer chains having an active terminal prepared in the first step into coupled polymer chains by a coupling reaction to prepare a solution containing the polymer chains having an active terminal and the coupled polymer chains; and
a third step of further polymerizing the polymer chains having an active terminal with a monomer containing the conjugated diene compound after the coupling reaction is performed in the second step,
wherein in at least one of the first step and the third step, the monomer used in the polymerization is a monomer containing a vinyl compound having a functional group interactive with silica in addition to the conjugated diene compound.

**11.** The method of preparing a conjugated diene-based polymer according to claim 10, wherein the polymerization initiator is further added at any one of timings of during the polymerization in the first step, at the start of the polymerization in the third step, and during the polymerization in the third step.

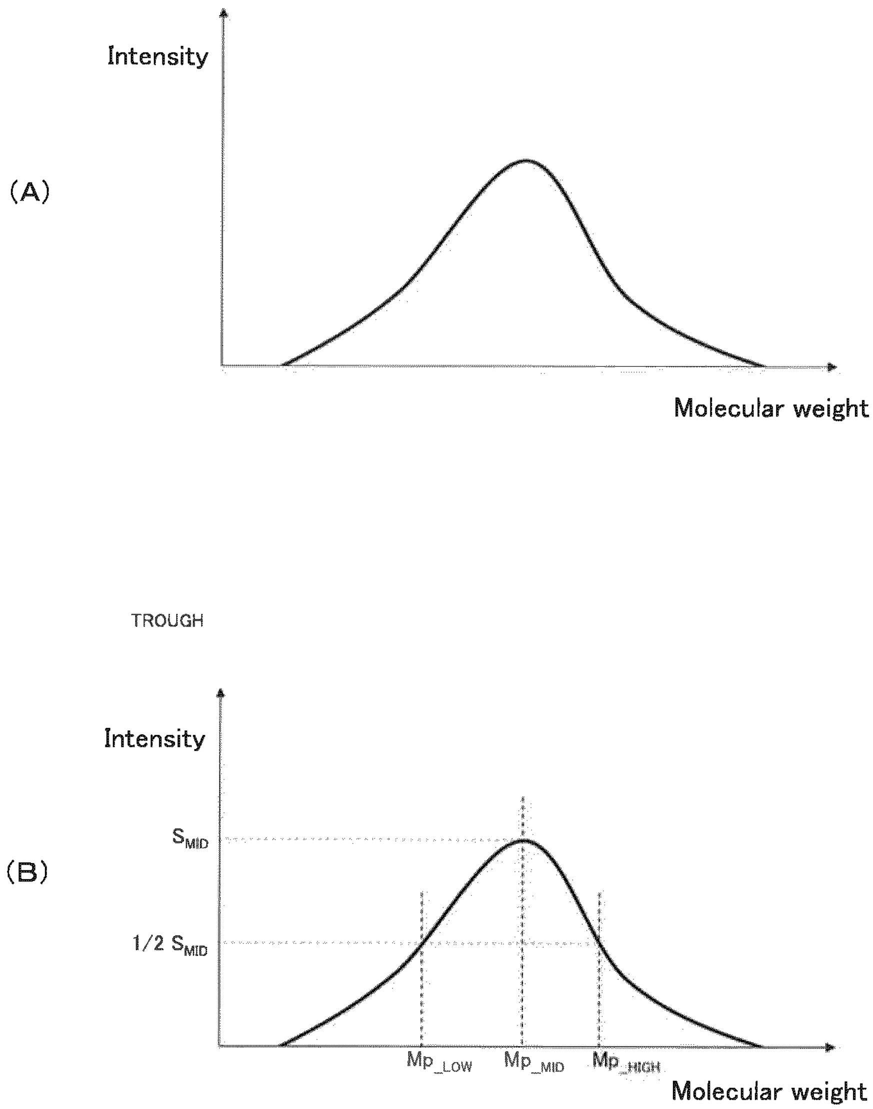
(A)
Intensity
Molecular weight
TROUGH
(B)
Intensity
$S_{MID}$
1/2 $S_{MID}$
$Mp_{_LOW}$
$Mp_{_MID}$
$Mp_{_HIGH}$
Molecular weight

FIG. 1

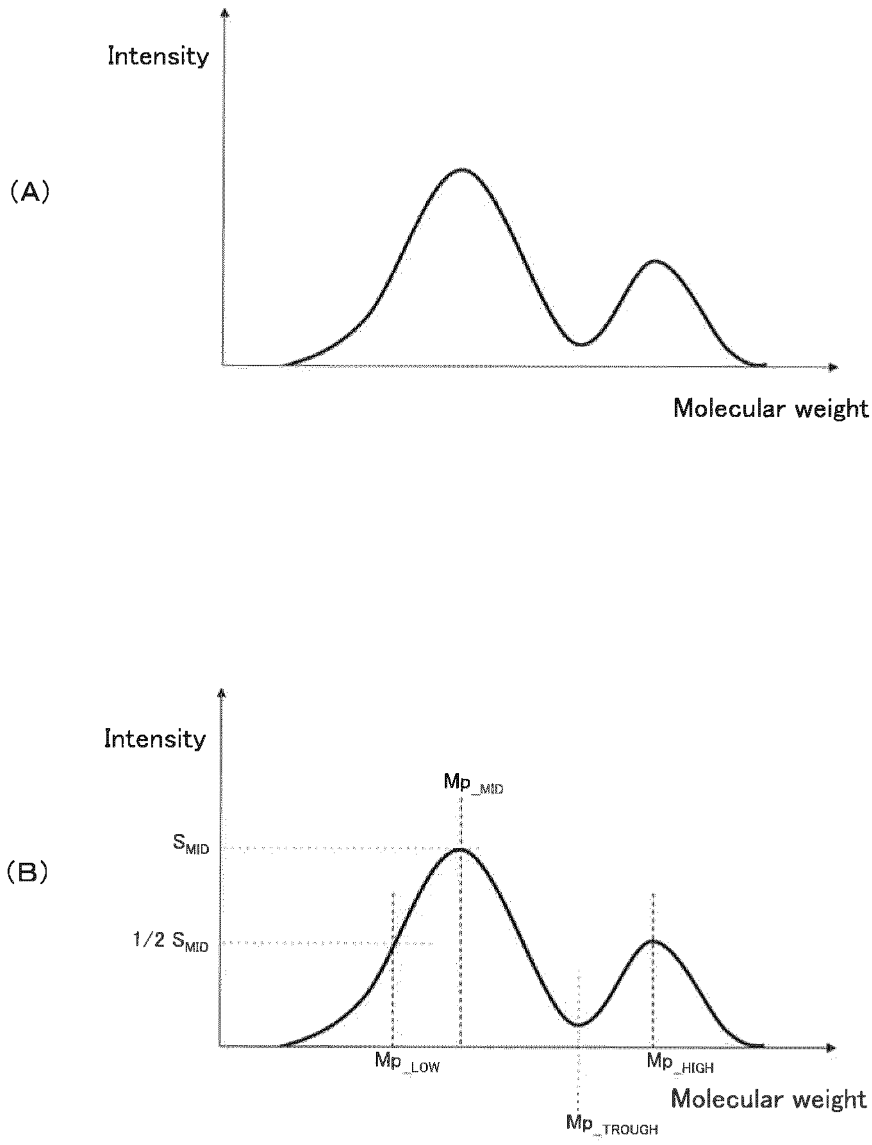
(A)
Intensity
Molecular weight
(B)
Intensity
$Mp_{_MID}$
$S_{MID}$
$1/2\ S_{MID}$
$Mp_{_LOW}$
$Mp_{_HIGH}$
Molecular weight
$Mp_{_TROUGH}$

FIG. 2

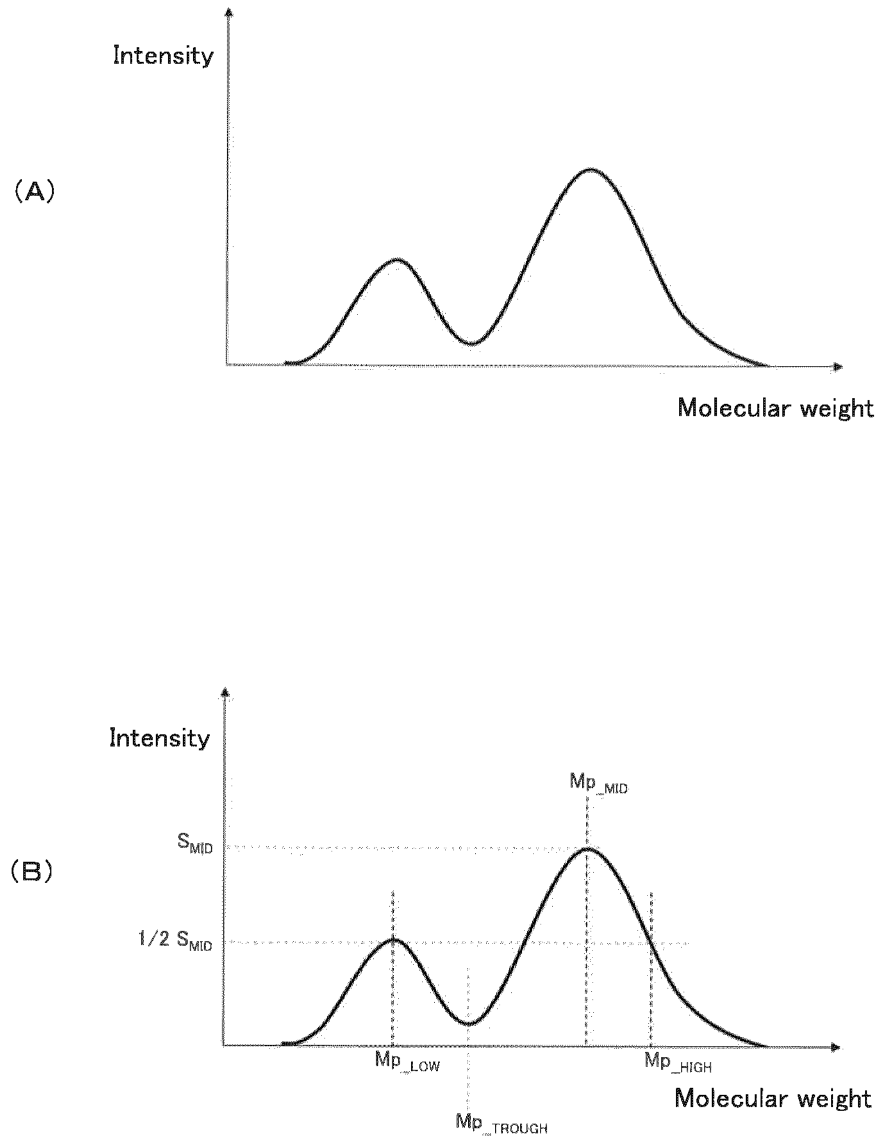
(A)
Intensity
Molecular weight
(B)
Intensity
Mp_MID
S_MID
1/2 S_MID
Mp_LOW
Mp_TROUGH
Mp_HIGH
Molecular weight

FIG. 3

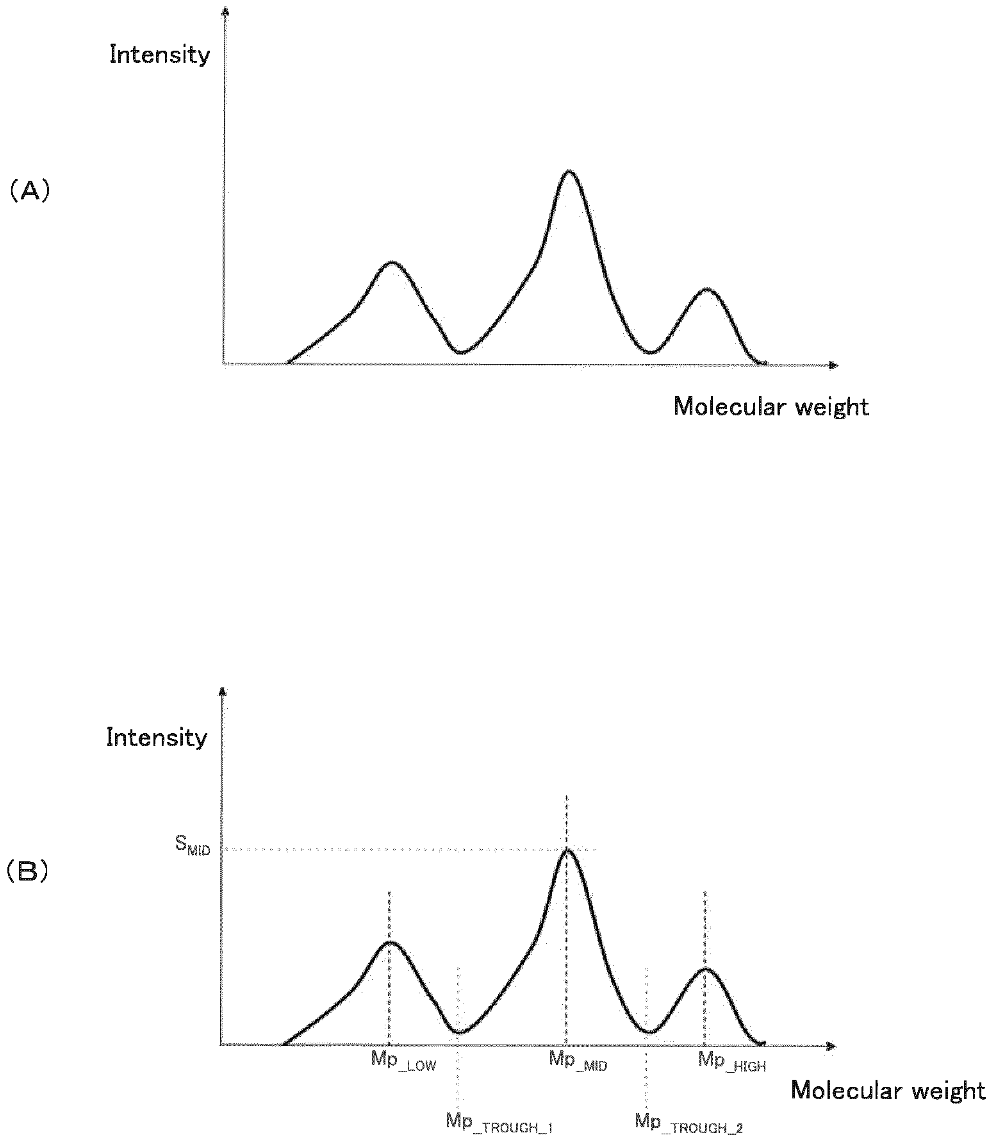
(A)
Intensity
Molecular weight
(B)
Intensity
S_MID
Mp_LOW
Mp_MID
Mp_HIGH
Mp_TROUGH_1
Mp_TROUGH_2
Molecular weight

FIG. 4

(A)

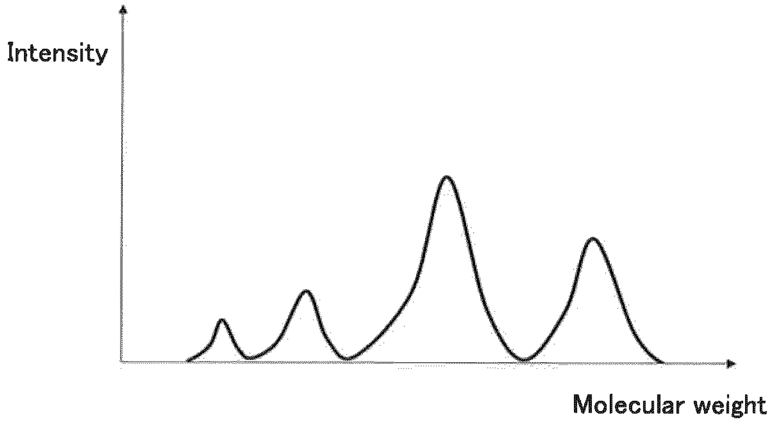
Intensity
Molecular weight

(B)

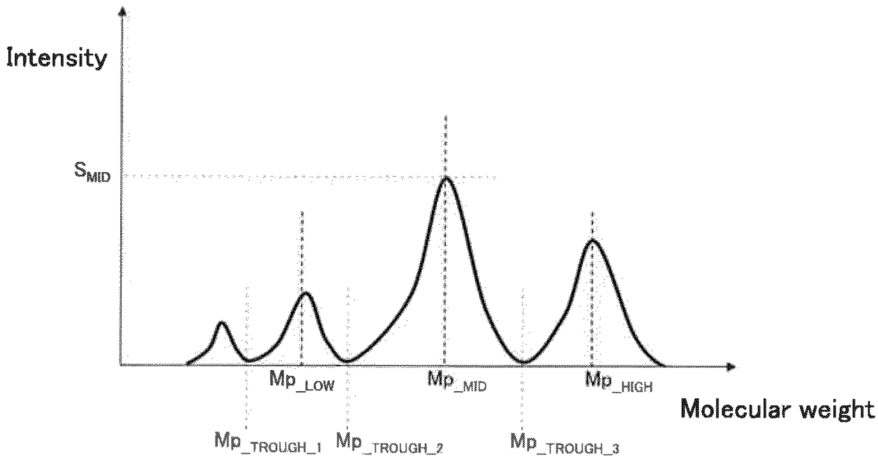
Intensity
S_MID
Mp_LOW
Mp_MID
Mp_HIGH
Molecular weight
Mp_TROUGH_1
Mp_TROUGH_2
Mp_TROUGH_3

FIG. 5

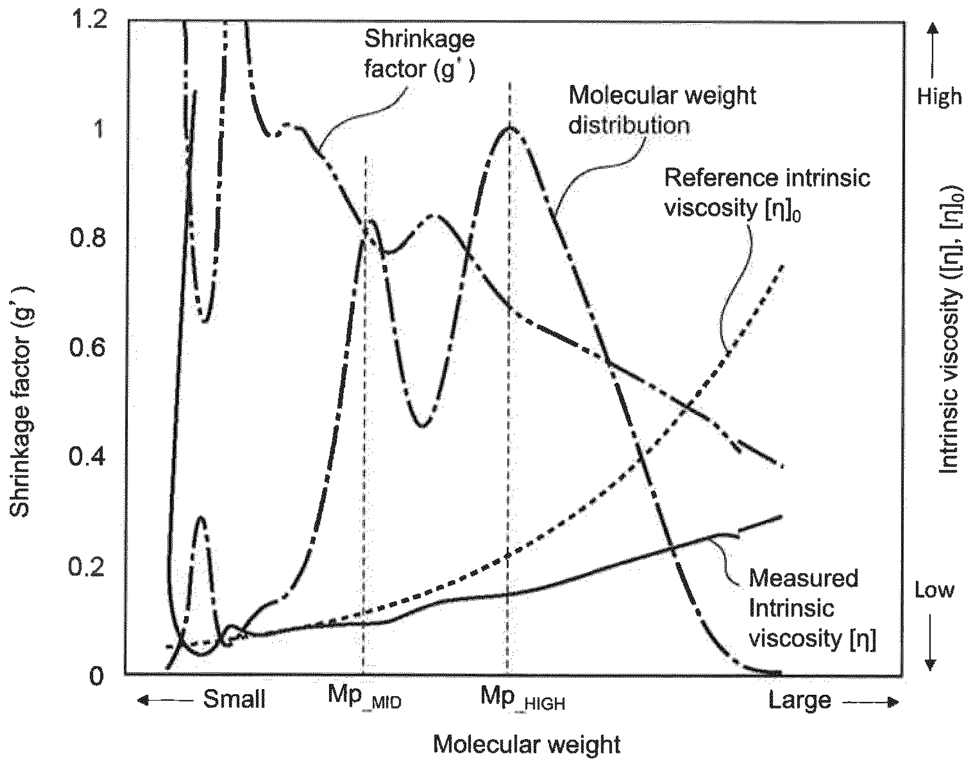
1.2
1
0.8
0.6
0.4
0.2
0
Shrinkage factor (g')
Shrinkage
factor (g')
Molecular weight
distribution
Reference intrinsic
viscosity [η]0
Measured
Intrinsic
viscosity [η]
High
Low
Intrinsic viscosity ([η], [η]0)
Small
Mp_MID
Mp_HIGH
Large
Molecular weight

FIG. 6

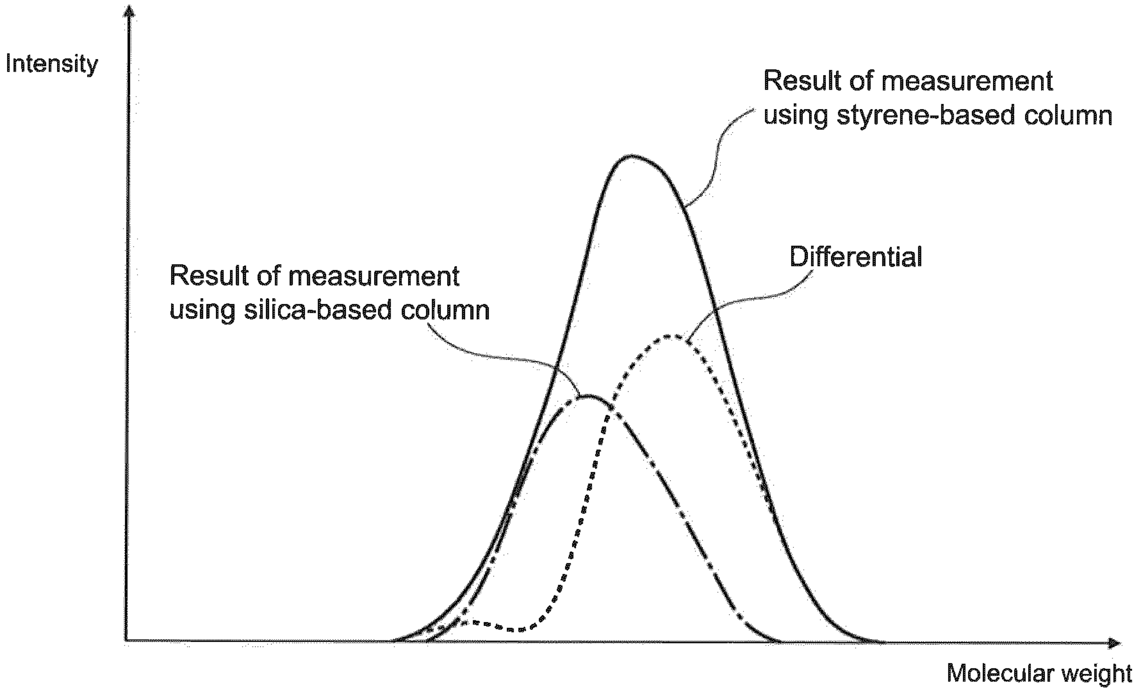
Intensity
Result of measurement using styrene-based column
Differential
Result of measurement using silica-based column
Molecular weight

FIG. 7

**INTERNATIONAL SEARCH REPORT**

International application No. PCT/JP2021/013377

A. CLASSIFICATION OF SUBJECT MATTER
Int. Cl. B60C1/00(2006.01)i, C08C19/25(2006.01)i, C08F36/04(2006.01)i, C08L9/00(2006.01)i, C08L9/06(2006.01)i, C08K3/013(2018.01)i
FI: C08F36/04, C08K3/013, C08L9/00, C08L9/06, B60C1/00 Z, C08C19/25
According to International Patent Classification (IPC) or to both national classification and IPC

B. FIELDS SEARCHED

Minimum documentation searched (classification system followed by classification symbols)
Int. Cl. B60C1/00, C08C19/25, C08F36/04, C08L9/00, C08L9/06, C08K3/013

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2020-37678 A (ASAHI KASEI CORP.) 12 March 2020, claims 1, 4, 8, 11, production example 10, table 2, paragraphs [0165], [0193], [0194] | 1-9 |
| X | JP 2018-28047 A (ASAHI KASEI CORP.) 22 February 2018, abstract, claims 1, 4-5, example 4, table 1, paragraphs [0116], [0119]-[0122] | 1-9 |
| X | WO 2018/034194 A1 (ASAHI KASEI CORP.) 22 February 2018, claims 1, 8-10, examples 1-5, table 1, paragraphs [0007], [0031], [0166] | 1-9 |
| X | WO 2019/020417 A1 (TRINSEO EUROPE GMBH) 31 January 2019, claims, examples E1-E3 | 10-11 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14.05.2021 | 01.06.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/013377

C (Continuation). DOCUMENTS CONSIDERED TO BE RELEVANT

| Category* | Citation of document, with indication, where appropriate, of the relevant passages | Relevant to claim No. |
|---|---|---|
| A | WO 2018/056025 A1 (JAPAN ELASTOMER CO., LTD.) 29 March 2018 | 1-11 |

Form PCT/ISA/210 (continuation of second sheet) (January 2015)

## INTERNATIONAL SEARCH REPORT

International application No.
PCT/JP2021/013377

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

(See extra sheet.)

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**
Information on patent family members

International application No.
PCT/JP2021/013377

| Patent Documents referred to in the Report | Publication Date | Patent Family | Publication Date |
|---|---|---|---|
| JP 2020-37678 A | 12.03.2020 | DE 102019123052 A<br>CN 110872405 A | |
| JP 2018-28047 A | 22.02.2018 | (Family: none) | |
| WO 2018/034194 A1 | 22.02.2018 | EP 3502145 A1<br>claims 1, 8-10, examples 1-5, table 1, paragraphs [0014], [0074]-[0077], [0367]-[0371]<br>CN 109563184 A<br>KR 10-2019-0032437 A<br>BR 112019002833 A<br>TW 201815830 A | |
| WO 2019/020417 A1 | 31.01.2019 | JP 2020-531598 A<br>claims, example E1-E3<br>US 2020/0131358 A1<br>EP 3434697 A1<br>KR 10-2020-0036841 A<br>CN 111032697 A<br>TW 201910357 A | |
| WO 2018/056025 A1 | 29.03.2018 | US 2020/0024383 A1<br>EP 3517552 A1<br>KR 10-2019-0020061 A<br>CN 109476778 A<br>BR 112019005573 A<br>TW 201815834 A | |

Form PCT/ISA/210 (patent family annex) (January 2015)

**INTERNATIONAL SEARCH REPORT**

International application No.
PCT/JP2021/013377

(Continuation of Box No. III)

The claims are classified as the following two inventions.

(Invention 1) Claims 1-9

Claim 1 discloses a conjugated diene polymer for which a high molecular weight portion and a medium molecular weight portion are delimited. Claims 2-9 are dependent claims of claim 1, and thus claims 1-9 are classified as invention 1.

(Invention 2) Claims 10-11

Claims 10-11 set forth a method of manufacturing a conjugated diene polymer comprising first to third steps. Each claim classified as invention 1 only shares the technical feature of being a "conjugated diene polymer," but this feature is obviously not a special technical feature.

Accordingly, claims 10-11 are classified as invention 2.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5708092 A
- GB 2241239 A
- US 5527753 A